# EUROPEAN PATENT APPLICATION

(11) **EP 4 768 991 A1**
(43) Date of publication of application: **01.07.2026**
(21) Application number: 24383485.0
(22) Date of filing: 30.12.2024
(51) Int. Cl.: G01S 19/15, G01S 19/21, G01S 19/20, G01S 19/39

(54) **SYSTEM AND METHOD FOR IDENTIFICATION OF NAVIGATION SIGNAL INTERFERENCE**

(71) Applicant: The Boeing Company, Arlington, VA 22202 (US)
(72) Inventor: COSTAS ÁLVAREZ, Pablo, 28042 MADRID (ES); SCARLATTI, David, 28042 MADRID (ES); DREWS, Robin Christian, 63263 NEU-ISENBURG (DE); GÜEMES JIMENEZ, Alejandro, 28042 MADRID (ES); BODENSOHN, David, 63263 NEU-ISENBURG (DE); RATH, Sabine, 63263 NEU-ISENBURG (DE)
(74) Representative: ZBM Patents - Zea, Barlocci & Markvardsen

(57) **Abstract**

A system includes one or more processors configured to obtain navigation system quality information from multiple data sources. The one or more processors are further configured to generate navigation signal interference map information based on the navigation system quality information. For example, the one more processors may be configured to aggregate, based on one or more parameters, first data from a first data source of the multiple data sources, and identify one or more areas associated with low quality navigation signals based on second data from a second data source of the multiple data sources. A portion of the aggregated first data may be discarded based on the one or more areas to generate the navigation signal interference map information. The one or more processors may also be configured to output the navigation signal interference map information.

## Description

### FIELD OF THE DISCLOSURE

The present disclosure is generally related to identification of navigation signal interference.

### BACKGROUND

A Global Navigation Satellite System (GNSS), such as Galileo from Europe, Global Positioning System (GPS) or Wide Area Augmentation System (WAAS) from the USA, Globalnaya Navigazionnaya Sputnikovaya Sistema (GLONASS) from Russia, BeiDou Navigation Satellite system (BDS) from China, India Regional Navigation Satellite System (IRNSS) from India, or Quasi-Zenith Satellite System (QZSS) from Japan, is a network of satellites that transmit positioning and timing data to GNSS receivers. These GNSS receivers are configured to utilize the positioning and timing data to determine a location associated with the GNSS receiver.

Conditions of the satellite navigation system or environment of a GNSS receiver may prevent a GNSS receiver from receiving adequate signals (e.g., positioning and timing data) from satellites of the GNSS. For example, a satellite constellation of the GNSS system may be arranged in orbit such that one or more areas of low-quality signals exist. As another example, interference, such as jamming signals (e.g., an intentional radio frequency interference with GNSS signals) or spoofing signals in an environment can impact a GNSS receiver's ability to receive the signals from the GNSS. To illustrate, jamming signals can disrupt the GNSS receiver's ability to lock onto the signals from the GNSS, resulting in the GNSS system becoming ineffective or degraded for the GNSS receiver in the affected area. Spoofing involves broadcasting fake satellite signals (i.e., "spoofed" signals) that provide false positioning and/or timing data to the GNSS receiver to deceive or misdirect the GNSS receiver. As a result of the interference (e.g., jamming and/or spoofing), the GNSS receiver may be unable to calculate correct position, navigation, and timing data (PNT).

### SUMMARY

In a particular implementation, a system includes one or more processors configured to obtain navigation system quality information from multiple data sources. The navigation system quality information includes first data obtained from a first data source of the multiple data sources and second data obtained from a second data source of the multiple data sources. The one or more processors are also configured to aggregate the first data based on one or more parameters to generate aggregated first data, and identify one or more areas associated with low quality navigation signals based on the second data. The one or more processors are further configured to discard, based on the one or more areas, a portion of the aggregated first data to generate navigation signal interference map information. The one or more processors are configured to output the navigation signal interference map information.

In another particular implementation, a method for identifying navigation signal interference includes obtaining navigation system quality information from multiple data sources. The navigation system quality information includes first data obtained from a first data source of the multiple data sources and second data obtained from a second data source of the multiple data sources. The method also includes aggregating the first data based on one or more parameters to generate aggregated first data, and identifying one or more areas associated with low quality navigation signals based on the second data. The method further includes discarding, based on the one or more areas, a portion of the aggregated first data to generate navigation signal interference map information. The method includes outputting the navigation signal interference map information.

In another particular implementation, a non-transitory, computer readable medium storing instructions that, when executed by one or more processors, cause the one or more processors to initiate, perform, or control operations to identify navigation signal interference. The operations include obtaining navigation system quality information from multiple data sources. The navigation system quality information includes first data obtained from a first data source of the multiple data sources and second data obtained from a second data source of the multiple data sources. The operations also include aggregating the first data based on one or more parameters to generate aggregated first data, and identifying one or more areas associated with low quality navigation signals based on the second data. The operations further include discarding, based on the one or more areas, a portion of the aggregated first data to generate navigation signal interference map information. The operations include outputting the navigation signal interference map information.

In another particular implementation, an apparatus includes means for obtaining navigation system quality information from multiple data sources. The navigation system quality information includes first data obtained from a first data source of the multiple data sources and second data obtained from a second data source of the multiple data sources. The apparatus also includes means for aggregating the first data based on one or more parameters to generate aggregated first data, and means for identifying one or more areas associated with low quality navigation signals based on the second data. The apparatus further includes means for discarding, based on the one or more areas, a portion of the aggregated first data to generate navigation signal interference map information. The apparatus includes means for outputting the navigation signal interference map information.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 is a diagram that illustrates an example of a system configured to identify interference associated with navigation signals, in accordance with some examples of the subject disclosure.
FIG. 2 is a diagram that illustrates an additional example of a system configured to identify interference associated with navigation signals, in accordance with some examples of the subject disclosure.
FIG. 3 is a functional diagram that illustrates another example of a system configured to identify interference associated with navigation signals, in accordance with some examples of the subject disclosure.
FIG. 4 is a diagram that illustrates an example of a map that represents predicted satellite coverage of a navigation system, in accordance with some examples of the subject disclosure.
FIG. 5 is a diagram that illustrates an example of a representation of an area to indicate interference associated with navigation signals, in accordance with some examples of the subject disclosure.
FIG. 6 is a diagram that illustrates an example of a map that represents interference associated with navigation signals, in accordance with some examples of the subject disclosure.
FIG. 7 is a diagram that illustrates another example of a map that represents interference associated with navigation signals, in accordance with some examples of the subject disclosure.
FIG. 8 is a diagram that illustrates a further example of a map that represents interference associated with navigation signals, in accordance with some examples of the subject disclosure.
FIG. 9 is diagram that illustrates an additional example of a map that represents interference associated with navigation signals, in accordance with some examples of the subject disclosure.
FIG. 10 is a diagram that illustrates an example of a graph of factors associated with jamming interference, in accordance with some examples of the subject disclosure.
FIG. 11 is diagram that illustrates an example of a jamming pattern generated by a jamming source, in accordance with some examples of the subject disclosure.
FIG. 12 is diagram that illustrates an example of a map that represents interference associated with navigation signals, in accordance with some examples of the subject disclosure.
FIG. 13 is diagram that illustrates an example of a map that represents interference associated with navigation signals for an aircraft, in accordance with some examples of the subject disclosure.
FIG. 14 a flow chart that illustrates an example of a method of identifying interference associated with navigation signals, in accordance with some examples of the subject disclosure.
FIG. 15 is a flowchart illustrating an example of a life cycle of the aircraft of FIG. 1.
FIG. 16 is a block diagram of a particular implementation of the aircraft of FIG. 1.
FIG. 17 is a block diagram of a computing environment including a computing device configured to support aspects of computer-implemented methods and computer-executable program instructions (or code) according to the present disclosure.

### DETAILED DESCRIPTION

Interference, such as jamming signals (e.g., an intentional radio frequency interference with Global Navigation Satellite System (GNSS) signals) or spoofing signals in an environment can impact a GNSS receiver's ability to receive the signals from the GNSS. The interferences (e.g., jamming and/or spoof) may reduce or eliminate the GNSS receiver's ability to calculate position, navigation, and timing data (PNT). In some circumstances, the GNSS receiver or an operator of the GNSS receiver may be unaware that the GNSS receiver is within a geographic area in which interference is occurring.

Aspects disclosed herein present systems and methods for identifying interference associated with navigation signals. For example, a system is configured to obtain navigation system quality information from multiple data sources, and generate navigation signal interference map information based on the navigation system quality information. To illustrate, the system may aggregate first data from a first data source of the multiple data sources. In some implementations, the first data is associated with information from one or more aircraft. In some such implementations, the first data source of the multiple data sources can include an automatic dependent surveillance broadcast (ADS-B) data source, a quick access recorder (QAR) data source, or a combination thereof. Additionally, or alternatively, the first data includes navigation integrity category (NIC) data, navigation accuracy category-position (NACp) data, or a combination thereof. In some implementations, the system aggregates the first data with respect to one or more areas, such as one or more geographic areas. To illustrate, the system may aggregate the first data based on one or more parameters, such as an integrity threshold, an area size, a vertical granularity, a time period, or a combination thereof, to generate aggregated first data.

The system may also identify one or more areas associated with low quality navigation signals based on second data from a second data source of the multiple data sources. The second data source of the multiple data sources can include a receiver autonomous integrity monitoring (RAIM) data source, a system wide information management (SWIM) data source, or a combination thereof. The system can discard a portion of the aggregated first data based on the one or more identified areas to generate the navigation signal interference map information that indicates areas of radio frequency interference associated with navigation signals of the GNSS. Accordingly, the system is able to generate data (e.g., the navigation signal interference map information) associated with one or more areas of interference of GNSS systems, where the data is based on multiple data sources.

In some implementations, the system is configured to identify a source of the interference, an area in which spoofing navigation signals are present, or a combination there. For example, to identify a source of interference, the system can apply a model to the navigation signal interference map information to identify a pattern of interference and a corresponding location of a source of the interference. As another example, to identify the presence of spoofing navigation signals, the system can detect a change in a signal quality of navigation signal in an area over time. To illustrate, the presence of spoofing navigation signals in an area may be identified based on a determination that a first signal quality in the area before detection of interference is less than a second signal quality in the area after detection of the interference. In some other implementations, the system can also, in real-time or near-real-time, track/monitor an in-flight aircraft and generate a notification of a data integrity event (e.g., interference of navigation signals).

In some implementations, the system is configured to output the navigation signal interference map information. For example, the navigation signal interference map information may be output to a GNSS receiver or another device. In some implementations, the navigation signal interference map information is provided to a flight planning system to be able to avoid a potentially jammed area, to the cockpit (e.g., an Electronic Flight Bag (EFB)) for flight crew situational awareness about jamming/spoofing activities in the trajectory of a flight, or to maintenance staff to conduct extra inspections of aircraft GNSS equipment after experiencing jamming. Additionally, or alternatively, the navigation signal interference map information may be used to generate an interference map that indicates a degradation of navigation signals in an area (e.g., a geographic area and/or one or more vertical levels of the geographic area). In some implementations, the interference map may be presented or adjusted based on selection of the one or more parameters, such as the integrity threshold, the area size, the vertical granularity, the time period, or a combination thereof.

One benefit of the disclosed systems and methods is that one or more areas that include interference, such as jamming or spoofing, of signals of the GNSS are identified based on data from multiple sources, such as an ADS-B data source and an RAIM data source. The identified areas may correspond to geographical areas (and airspace above the geographical areas) that have GNSS integrity degradation. Additionally, or alternatively, the disclosed systems and methods can also identify the location of a source that is producing jamming signals and/or spoofing signals. In some implementations, the navigation signal interference map information produced by the systems and methods may enable an operator of a GNSS receiver to determine when the GNSS receiver is in proximity to an affected area and use conventional navigation aids, other than the GNSS receiver, to determine position information, navigation information, timing information, or a combination thereof.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

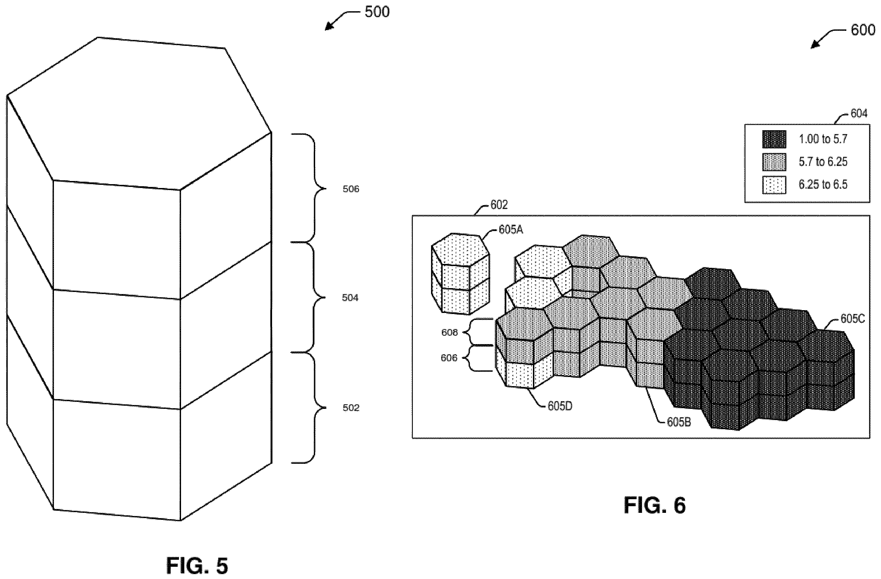

Particular implementations are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 6, multiple areas are illustrated and associated with reference numbers 605A and 605B. When referring to a particular one of these designs, such as an area 605A, the distinguishing letter "A" is used. However, when referring to any arbitrary one of these areas or to these areas as a group, the reference number 605 is used without a distinguishing letter.

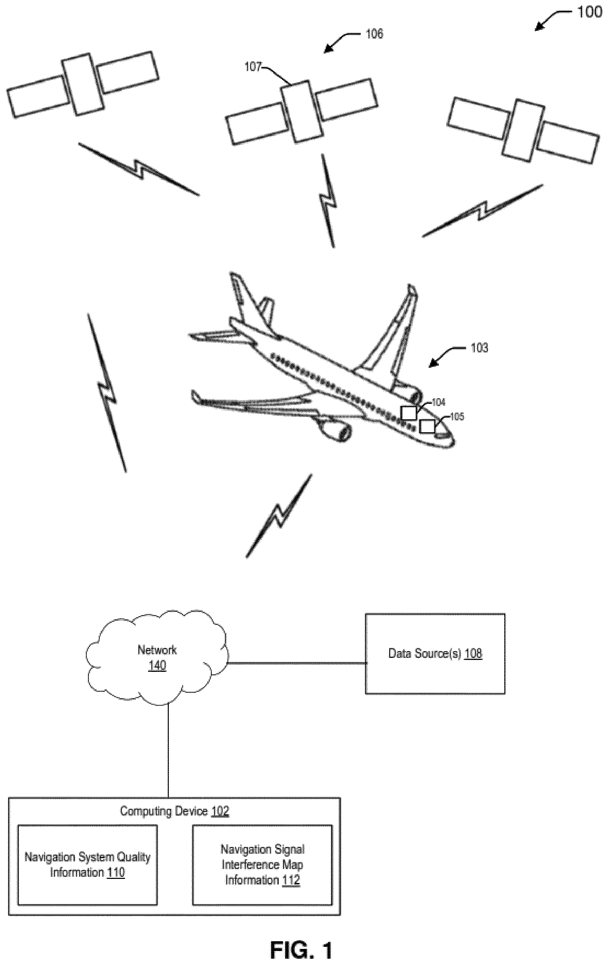

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more data sources ("data sources(s)" 108 in FIG. 1), which indicates that in some implementations the system 100 includes a single data source 108 and in other implementations the system 100 includes multiple data source 108. For ease of reference herein, such features are generally introduced as "one or more" features, and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," "aggregating," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

As used herein, the term "machine learning" should be understood to have any of its usual and customary meanings within the fields of computers science and data science, such meanings including, for example, processes or techniques by which one or more computers can leam to perform some operation or function without being explicitly programmed to do so. As a typical example, machine learning can be used to enable one or more computers to analyze data to identify patterns in data and generate a result based on the analysis. For certain types of machine learning, the results that are generated include data that indicates an underlying structure or pattern of the data itself. Such techniques, for example, include so called "clustering" techniques, which identify clusters (e.g., groupings of data elements of the data).

For certain types of machine learning, the results that are generated include a data model (also referred to as a "machine-learning model" or simply a "model"). Typically, a model is generated using a first data set to facilitate analysis of a second data set. For example, a first portion of a large body of data may be used to generate a model that can be used to analyze the remaining portion of the large body of data. As another example, a set of historical data can be used to generate a model that can be used to analyze future data.

Since a model can be used to evaluate a set of data that is distinct from the data used to generate the model, the model can be viewed as a type of software (e.g., instructions, parameters, or both) that is automatically generated by the computer(s) during the machine learning process. As such, the model can be portable (e.g., can be generated at a first computer, and subsequently moved to a second computer for further training, for use, or both). Additionally, a model can be used in combination with one or more other models to perform a desired analysis. To illustrate, first data can be provided as input to a first model to generate first model output data, which can be provided (alone, with the first data, or with other data) as input to a second model to generate second model output data indicating a result of a desired analysis. Depending on the analysis and data involved, different combinations of models may be used to generate such results. In some examples, multiple models may provide model output that is input to a single model. In some examples, a single model provides model output to multiple models as input.

Examples of machine-learning models include, without limitation, perceptrons, neural networks, support vector machines, regression models, decision trees, Bayesian models, Boltzmann machines, adaptive neuro-fuzzy inference systems, as well as combinations, ensembles and variants of these and other types of models. Variants of neural networks include, for example and without limitation, prototypical networks, autoencoders, transformers, self-attention networks, convolutional neural networks, deep neural networks, deep belief networks, etc. Variants of decision trees include, for example and without limitation, random forests, boosted decision trees, etc.

Since machine-learning models are generated by computer(s) based on input data, machine-learning models can be discussed in terms of at least two distinct time windows - a creation/training phase and a runtime phase. During the creation/training phase, a model is created, trained, adapted, validated, or otherwise configured by the computer based on the input data (which in the creation/training phase, is generally referred to as "training data"). Note that the trained model corresponds to software that has been generated and/or refined during the creation/training phase to perform particular operations, such as classification, prediction, encoding, or other data analysis or data synthesis operations. During the runtime phase (or "inference" phase), the model is used to analyze input data to generate model output. The content of the model output depends on the type of model. For example, a model can be trained to perform classification tasks or regression tasks, as non-limiting examples. In some implementations, a model may be continuously, periodically, or occasionally updated, in which case training time and runtime may be interleaved or one version of the model can be used for inference while a copy is updated, after which the updated copy may be deployed for inference.

In some implementations, a previously generated model is trained (or re-trained) using a machine-learning technique. In this context, "training" refers to adapting the model or parameters of the model to a particular data set. Unless otherwise clear from the specific context, the term "training" as used herein includes "re-training" or refining a model for a specific data set. For example, training may include so called "transfer learning." In transfer learning a base model may be trained using a generic or typical data set, and the base model may be subsequently refined (e.g., re-trained or further trained) using a more specific data set.

A data set used during training is referred to as a "training data set" or simply "training data". The data set may be labeled or unlabeled. "Labeled data" refers to data that has been assigned a categorical label indicating a group or category with which the data is associated, and "unlabeled data" refers to data that is not labeled. Typically, "supervised machine-learning processes" use labeled data to train a machine-learning model, and "unsupervised machine-learning processes" use unlabeled data to train a machine-learning model; however, it should be understood that a label associated with data is itself merely another data element that can be used in any appropriate machine-learning process. To illustrate, many clustering operations can operate using unlabeled data; however, such a clustering operation can use labeled data by ignoring labels assigned to data or by treating the labels the same as other data elements.

Training a model based on a training data set generally involves changing parameters of the model with a goal of causing the output of the model to have particular characteristics based on data input to the model. To distinguish from model generation operations, model training may be referred to herein as optimization or optimization training. In this context, "optimization" refers to improving a metric, and does not mean finding an ideal (e.g., global maximum or global minimum) value of the metric. Examples of optimization trainers include, without limitation, backpropagation trainers, derivative free optimizers (DFOs), and extreme learning machines (ELMs). As one example of training a model, during supervised training of a neural network, an input data sample is associated with a label. When the input data sample is provided to the model, the model generates output data, which is compared to the label associated with the input data sample to generate an error value. Parameters of the model are modified in an attempt to reduce (e.g., optimize) the error value. As another example of training a model, during unsupervised training of an autoencoder, a data sample is provided as input to the autoencoder, and the autoencoder reduces the dimensionality of the data sample (which is a lossy operation) and attempts to reconstruct the data sample as output data. In this example, the output data is compared to the input data sample to generate a reconstruction loss, and parameters of the autoencoder are modified in an attempt to reduce (e.g., optimize) the reconstruction loss.

FIG. 1 is a diagram that illustrates an example of a system 100 configured to identify interference associated with navigation signals, in accordance with some examples of the subject disclosure. In some implementations, the system 100 includes a computing device 102, a vehicle (e.g., an aircraft 103), one or more data sources 108 (hereinafter referred to as "data source 108"), and a GNSS 106. Although the vehicle is described herein as the aircraft 103, vehicle may additionally or alternatively include an automobile, a watercraft, a spacecraft, unmanned aerial vehicle, or another vehicle, as illustrative, non-limiting examples. Devices or components of the system 100 may communicate via a network 140. The network 140 may include a wired network, a wireless network, or a combination thereof.

The GNSS 106 includes one or more satellites, such as a representative satellite 107. The GNSS 106 is configured to transmit positioning and timing data to one or more devices, such as a device that includes a GNSS receiver.

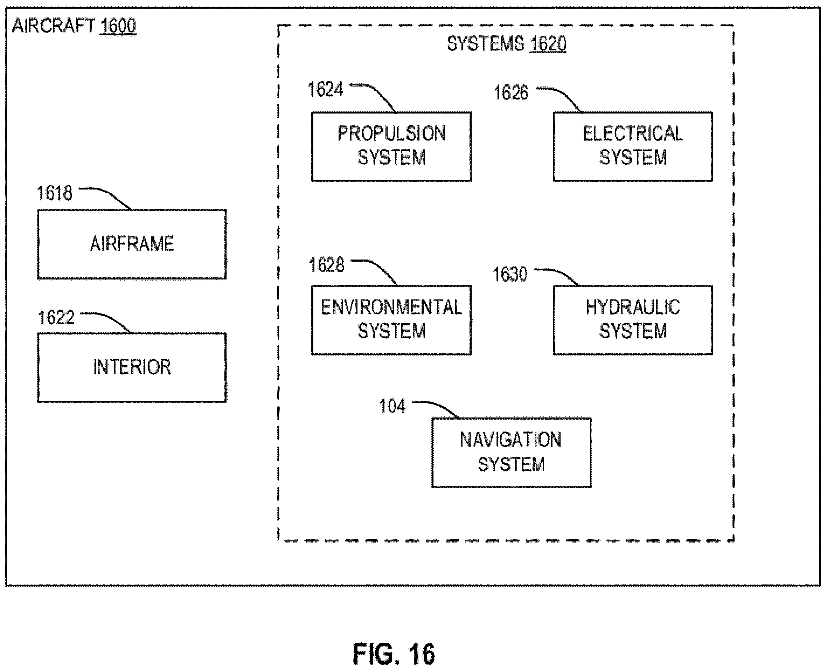

The aircraft 103 includes one or more components, such as a navigation system 104 and a data source 105. The aircraft 103 may also include one or more additional components, as described further herein at least with reference to FIG. 16. The navigation system 104 includes one or more devices that are configured to provide flight information for autonomous, semi-autonomous, or manual flight operations of the aircraft 103. For example, the navigation system 104 may include a component of the GNSS 106 (e.g., a GNSS receiver), an inertial reference system (IRS) or an inertial reference unit (IRU), a flight management system (FMS), distance measuring equipment (DME), very high frequency omni-directional range (VOR) equipment, a localizer (LOC), or a combination thereof. The IRS can include an accelerometer and a gyroscope, and is configured to detect displacement on one or more axes and calculate a position of the aircraft 103. The FMS is configured to determine and/or generate route data associated with a flightpath of the aircraft 103. Data source 105 may be configured to generate and record flight data associated with the aircraft 103. For example, the flight data may include or correspond to a flight plant, weather information, airport information, or a combination thereof. In some implementations, the data source 105 includes a quick access recorder (QAR) that is configured to generate QAR data. For example, the QAR may be configured to receive data from a flight data acquisition unit (FDAU). In some implementations, the data source 105 is coupled to or included in the navigation system 104.

The data source 108 may include an ADS-B data source, an RAIM data source, an SWIM data source, one or more historical data data sources, one or more ground-based data sources, another data source, or a combination thereof. In some implementations, the data source 108 includes or corresponds to a service provider such as Flightradar24 or GPS Jam.

ADS-B is a surveillance technology for tracking aircraft, such as the aircraft 103, that uses satellite-based navigation technology and a broadcast communications data-link. ADS-B requirements may be defined by at least 14 CFR § 91.225 and/or 14 CFR § 91.227. An aircraft that is an ADS-B capable aircraft may use an ADS-B receiver (e.g., a GNSS) receiver to derive its precise geographic position from satellites (e.g., the satellite 107) of the GNSS 106, and combine that geographic position with state information such as altitude, track, speed and flight number. The aircraft that includes an ADS-B receiver can receive (from other aircraft) one or more ADS-B position reports and communicate one or more ADS-B reports to other aircraft, ground stations, and the like. The ADS-B data source may include one or more ADS-B performance reports (e.g., one or more ADS-B position reports), such as an ADS-B performance report (e.g., an ADS-B position report) from the aircraft 103. In some implementations, the ADS-B data source includes real-time ADS-B data, historical ADS-B data, or a combination thereof. In some implementations, the ADS-B data includes or indicates flight ID data, surface position, airborne position, barometric altitude data, altitude information, navigation integrity category (NIC) data, navigation accuracy category-position (NACp) data, navigation accuracy category-velocity (NACv) data, source integrity level (SIL) data, source integrity level supplement (SILs) data, system design assurance (SDA) data, signal quality level (SQL), velocity and position delta (Vel/Position Δ) data, airborne velocity, vertical velocity data, or a combination thereof, as illustrative, non-limiting examples. Additionally, or alternatively, the ADS-B data may indicate whether or not an aircraft is on-ground, on-ground and still, on-ground and moving, or airborne.

RAIM is a technology configured to assess the integrity of individual signals collected and integrated by the receiver units (e.g., GNSS receivers) employed in the GNSS 106. In some implementations, RAIM data may provide satellite constellation accuracy information. For example, depending on the position of satellites of the GNSS 106, one or more areas may experience poor signal quality. Accordingly, the RAIM data may indicate a position of a satellite, a signal quality of an area, or a combination thereof. In some implementations, the RAIM data that may be provided by the RAIM data source includes real-time RAIM data, historical RAIM data, predicted RAIM data (e.g., a prediction/estimation of a future position of one or more satellites), or a combination there.

The SWIM data source is an information-sharing platform that is configured to provide aeronautical, flight, weather, and surveillance information, such as near real-time information. SWIM requirements may be defined by one or more FAA standards and specifications, such as FAA-STD-0065 Rev. B, FAA-STD-073A, FAA-STD-074, FAA-STD-075, SWIM-002, or SWIM-005, as illustrative, non-limiting examples. SWIM data provided by the SWIM data source may include one or more data types, such as an Aeronautical Information Exchange Model (AIXM), Flight Information Exchange Model (FIXM), Weather Information Exchange Model (WXXM), International Weather for Aviation Exchange Model (IWXXM), Airline Industry Data Exchange (AIDX), or a combination thereof, as illustrative, non-limiting examples.

The one or more ground-based data sources may include or correspond to a multilateration (MLAT) data source, a wide area multilateration (WAM) data source, a primary radar data source, or a combination thereof. Additionally, or alternatively, one or more ground-based data sources may include or correspond to a Mode S radar data source, a flight alarm (FLARM) data source, an Open Glider Network (OGN) data source, or a combination thereof.

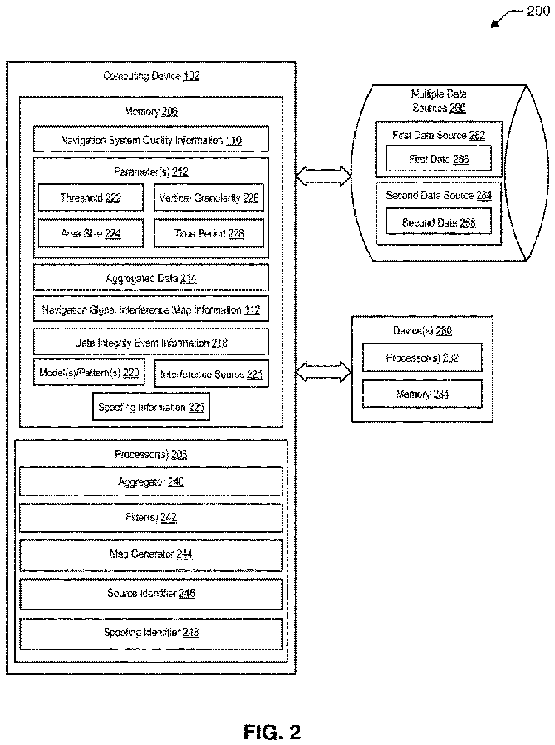

The computing device 102 is configured to communicate with one or more devices (e.g., the satellite 107 or the aircraft 103) or data sources (e.g., the data source 105 or 108) of the system 100. In some implementations, the computing device 102 includes a processing system. To illustrate, the computing device 102 may include one or more memory, one or more processors, or a combination thereof, as described further herein at least with reference to FIG. 2. In some examples, the one or more processors are coupled to the one or more memory that include instructions that, when executed by the one or more processors, cause the one or more processors to perform operations as described herein. In some implementations, the computing device 102 includes a computer, a server, a could computing device, or a combination thereof. A "computer" is generally a machine that is programmable or programmed to perform functions or operations. A server may include a distributed server (e.g., a group of servers), a cloud server, or a combination there. To illustrate, the computing device 102 may include multiple devices that are co-located or directly coupled to one another, or, alternatively, that communicate with one another across one or more computer networks, such as the network 140.

The computing device 102 includes navigation system quality information 110 and navigation signal interference map information 112. The computing device 102 is configured to obtain the navigation system quality information 110. For example, the computing device 102 is configured to obtain the navigation system quality information 110 from one or more data sources (e.g., the data source 105 or 108). The navigation system quality information 110 may include multiple types of data, such as first data having a first data type and second data having a second data type, where the first data type and the second data type are different data types. To illustrate, the first data type may be an ADS-B data type and the second data type may be a RAIM data type.

In some implementations, the computing device 102 is configured to obtain the navigation system quality information 110 from multiple data sources. To illustrate, the computing device 102 may obtain (e.g., receive) first data obtained from a first data source of the multiple data sources and second data obtained from a second data source of the multiple data sources. For example, the first data source may include or correspond to an ADS-B data source, a QAR data source, or a combination thereof. In some examples, the first data source includes an ADS-B data source and the first data includes or indicates NIC data, NACp data, or a combination thereof. Additionally, or alternatively, the second data source may include or correspond to an RAIM data source, an SWIM data source, or a combination thereof. In some examples, the second data source includes the RAIM data source and the second data includes or indicates a prediction/estimation of a of integrity of navigation signals for a future position of one or more satellites of the GNSS 106.

Additionally, or alternatively, the computing device 102 is configured to generate the navigation signal interference map information 112 based on the navigation system quality information 110. The navigation signal interference map information 112 indicates one or more areas of radio frequency interference associated with navigation signals of the GNSS 106. To illustrate, in some examples, the computing device 102 is configured to aggregate the first data based on one or more parameters to generate aggregated first data. In some implementations, the first data is aggregated based on one or more parameters, such as an integrity threshold, an area size, a vertical granularity, a time period, or a combination thereof, as illustrative, non-limiting examples. Additionally, or alternatively, the computing device 102 may filter (e.g., remove) on-ground data from the first data to generate (e.g., leave) filtered first data, and aggregate the first filtered data. The computing device 102 is also configured to identify one or more areas associated with low quality navigation signals based on the second data, and discard, based on the one or more areas, a portion of the aggregated first data to generate navigation signal interference map information 112. As an example, the navigation signal interference map information 112 includes a remainder of the aggregated first data after the portion of the aggregated first data is discarded.

In some implementations, the computing device 102 is configured to output the navigation signal interference map information 112. For example, the navigation signal interference map information 112 may be output to a GNSS receiver or another device. In some implementations, the navigation signal interference map information 112 is provided to a flight planning system, an air traffic control approval system, the aircraft 103 (e.g., to a cockpit of the aircraft 103), an aircraft operator, a maintenance department (to perform maintenance and service on the aircraft 103), or a combination thereof. Additionally, or alternatively, the computing device 102 may include or be associated with an application programming interface (API) that enables one or more other devices or systems to obtain the navigation signal interference map information 112.

In some implementations, the navigation signal interference map information 112 is used to generate an interference map that indicates a degradation of navigation signals in an area (e.g., a geographic area and/or one or more vertical levels of the geographic area). For example, the interference map may be generated by the computing device 102 or by another device that receives the navigation signal interference map information 112, such as a device of a flight planning system, an air traffic control approval system, the aircraft 103, an aircraft operator, or a maintenance department. The interference map may be divided into geographic areas, which may include an airspace, and may indicate a navigation signal quality for one or more areas. Examples or aspects of the interference map are described further herein at least with reference to FIGs. 5-9 and 12. In some implementations, the interference map may be presented or adjusted based on selection of the one or more parameters, such as the integrity threshold, the area size, the vertical granularity, the time period, or a combination thereof.

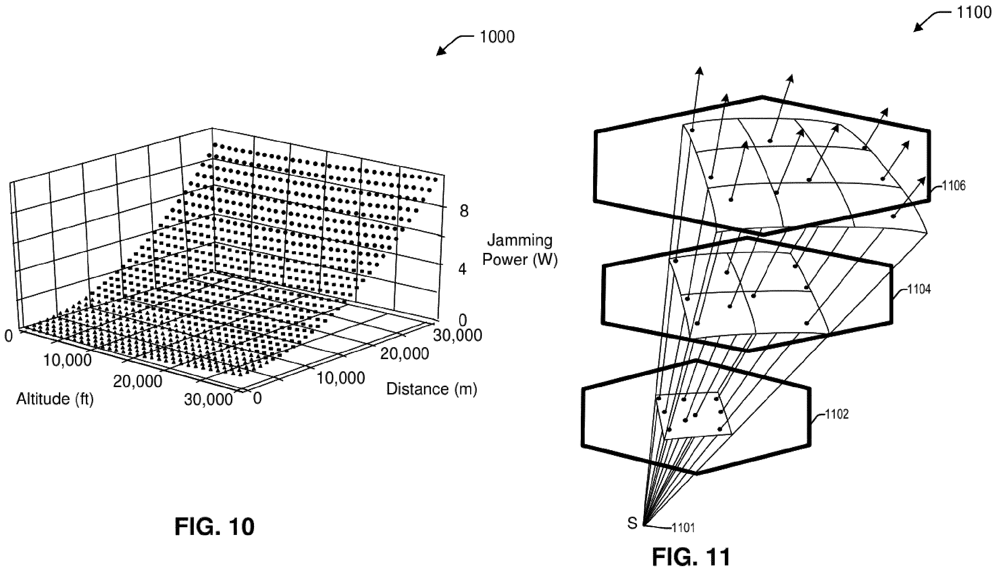

In some implementations, the computing device 102 is configured to identify a source of the interference, an area in which spoofing navigation signals are present, or a combination thereof. For example, to identify a source of interference, the computing device 102 can apply a model to the navigation signal interference map information to identify a pattern of interference and a corresponding location of a source of the interference, as described further herein at least with reference to FIGs. 2 or 11. As another example, to identify the presence of spoofing navigation signals, the computing device 102 can detect a change in a signal quality of navigation signal in an area over time. To illustrate, the presence of spoofing navigation signals in an area may be identified based on a determination that a signal quality of the area before detection of interference is less than a signal quality of the area after the interference is gone. In some such implementations, the navigation signal interference map information 112 can indicate a location of the source of interference, an area having spoofing navigation signals, or a combination thereof. In some other implementations, the computing device 102 can also, in real-time or near-real-time, track/monitor an in-flight aircraft and generate a notification of a data integrity event (e.g., interference of navigation signals). The computing device 102 may be configured to output the notification to the in-flight aircraft (e.g., the aircraft 103), an air traffic control approval system, or a maintenance department, as illustrative, non-limiting examples.

As described with reference to FIG. 1, the present disclosure provides techniques to support identification of interference associated with navigation signals. For example, the navigation signal interference map information 112 can indicate one or more areas (and airspace above the one or more areas) of degradation of navigation signals of the GNSS. The navigation signal interference map information 112 can enable an operator of a GNSS receiver to determine when the GNSS receiver is in proximity to an affected area and use conventional navigation aids, other than the GNSS receiver, to determine position information, navigation information, timing information, or a combination thereof. Additionally, or alternatively, the present disclosure provides identification of a location of a source that is producing gamming signals and/or an area that includes spoofing signals. For example, the navigation signal interference map information 112 can also include or provide additional information that indicates the location of the source that is producing jamming signals and/or that indicates the area in which spoofing signals are present.

FIG. 2 is a diagram that illustrates an additional example of a system 200 configured to identify interference associated with navigation signals, in accordance with some examples of the subject disclosure. The system 200 may include, be included within, or correspond to the system 100. The system 200 includes the computing device 102 coupled to multiple data sources 260 and one or more devices 280 (hereinafter referred to as the "device 280"). The computing device 102 may be configured to communicate with the multiple data sources 260 and the device 280 via one or more networks, such as the network 140 of FIG. 1.

The multiple data sources 260 may include or correspond to the data source 105 of FIG. 1, the data source 108, or a combination thereof. The multiple data sources 260 include a first data source 262 and a second data source 264. For example, the first data source 262 may include an ADS-B data source, a QAR data source, or a combination thereof. The first data source 262 includes or is configured to generate first data 266. As an illustrative, non-limiting example, the first data 266 includes NIC data, NACp data, or a combination thereof. Additionally, or alternatively, the second data source 264 may include an RAIM data source, an SWIM data source, or a combination thereof. The second data source 264 includes or is configured to generate second data 268. In some implementations, the first data 266 has a first data type and the second data 268 has a second data type that is different from the first data type. For example, the first data type bay be an ADS-B data type and the second data type may be an RAIM data type.

The device 280 can be any suitable electronic device configured to communicate with the computing device 102 and/or at least one data source of the multiple data sources 260. For example, the device 280 may include or correspond to a flight planning system, an air traffic control approval system, the aircraft 103 (e.g., to a cockpit of the aircraft 103), a device associated with an aircraft operator, a device associated with a maintenance department (to perform maintenance and service on the aircraft 103), or a combination thereof. In some implementations, the device 280 includes or corresponds to at least one data source of the multiple data sources 260, such as the first data source 262.

The device 280 can include one or more processors 282 (hereinafter referred to as the "processor 282") coupled to a memory 284 that includes instructions that, when executed by the processor 282, cause the processor 282 to execute certain functions (e.g., one or more operations). The processor 282 can be implemented as a single processor or as multiple processors, such as in a multi-core configuration, a multi-processor configuration, a distributed computing configuration, a cloud computing configuration, or any combination thereof.

In some aspects, the device 280 is configured to receive the navigation signal interference map information 112 from the computing device 102. For example, the device 280 may generate, based on the navigation signal interference map information 112, an interference map that indicates a degradation of navigation signals in an area (e.g., a geographic area and/or one or more vertical levels of the geographic area). Examples or aspects of the interference map are described further herein at least with reference to FIGs. 5-9 and 12.

The computing device 102 can include one or more processors 208 (hereinafter referred to as the "processor 208") coupled to a memory 206. The processor 208 can be implemented as a single processor or as multiple processors, such as in a multi-core configuration, a multi-processor configuration, a distributed computing configuration, a cloud computing configuration, or any combination thereof. The memory 206 includes a computer-readable medium that stores instructions that are executable by the processor 208. The instructions are executable to initiate, perform or control operations to aid in identification of interference associated with navigation signals. For example, the instructions, when executed by the processor 208, cause the processor 208 to execute certain functions (e.g., one or more operations).

The memory 206 includes the navigation system quality information 110, one or more parameters 212 (hereinafter referred to as the "parameter 212"), aggregated data 214, the navigation signal interference map information 112, data integrity event information 218, one or more models or patterns 220, an interference source 221, spoofing information 225, or a combination thereof. The navigation system quality information 110 may be received from the multiple data sources 260. The parameter 212 can include or indicate a threshold 222, an area size 224, a vertical granularity 226, and a time period 228. The threshold 222 may include or indicate a GNSS signal quality rating. In some implementations, the threshold 222, such as an NIC/NACp threshold, corresponds to a coding of NACp, which may be defined by 14 CFR § 91.227. To illustrate, the threshold 222 may be an integrity threshold having a value between 0-11, where 0 indicates poor or bad quality and 11 indicates good quality. As an illustrative, non-limiting example, the threshold 222 may be set to a value of 7. In some implementations, the threshold may include a range of values.

The area size 224 may include or indicate a dimension (e.g., a length), an area, or a combination thereof. In some implementations, an area has a shape and the area size 224 indicates a characteristic of the shape. For example, the shape may be a hexagon, such as a perfect hexagon having six equal sides and six equal angles. In some implementations, multiple areas may be arranged to form a grid, such as a hexagon grid. The vertical granularity 226 may include or indicate a number (e.g., a count) of vertical layers. For example, an airspace above an area of a map may be divided into one or more layers (e.g. one or more vertical levels). In some implementations, each layer of the one or more layers corresponds to a different altitude and/or altitude range. As an illustrative, non-limiting example, the vertical granularity 226 may include one hundred different layers. It is noted that the number of vertical layers may enable a search to be performed on the navigation signal interference map information 112 to identify a location of a source of interference, as described further herein at least with reference to FIG. 11. The time period 228 may indicate an amount of time, such as minutes, hours, days, weeks, months, etc., as illustrative, non-limiting examples. The time period 228 may indicate a previous amount of time, a future amount of time, or a combination thereof.

The aggregated data 214 may include or indicate the navigation system quality information 110 that has been aggregated based on the parameter 212. The data integrity event information 218 includes or indicates a change in interference of navigation signals associated with an in-flight aircraft. To illustrate, the data integrity event information 218 may indicate when a quality of navigation signals received by an in-flight aircraft is less than or equal to a threshold, such as the threshold 222. In some implementations, the processor 208 is configured to track an in-flight aircraft and generate the data integrity event information 218 based on a quality of navigation signals received by the in-flight aircraft being less than or equal to a threshold. The one or more models or patterns 220 includes or indicates a pattern of interference and a corresponding location of a source of the interference. An example of the one or more models or patterns 220 is described further herein at least with reference to FIG. 11. The interference source 221 indicates a location of a source of interference. The spoofing information 225 indicates an area having spoofing navigation signals.

The processor 208 can be implemented as a single processor or as multiple processors, such as in a multi-core configuration, a multi-processor configuration, a distributed computing configuration, a cloud computing configuration, or any combination thereof. The processor 208 can include one or more components or modules (e.g., a computer program or set of computer program instructions) configured to execute one or more functions, including an aggregator 240, one or more filters 242 (hereinafter referred to as the "filter 242"), a map generator 244, a source identifier 246, and a spoofing identifier 248.

The aggregator 240 is configured to aggregate the navigation system quality information 110 to generate the aggregated data 214. In some examples, the aggregator 240 aggregates the navigation system quality information 110 with respect one or more areas, such as one or more geographic areas. To illustrate, the aggregator 240 may aggregate the navigation system quality information 110 based on the parameter 212 to generate the aggregated data 214. To illustrate, the navigation system quality information 110 may be aggregated based on the threshold 222, the area size 224, the vertical granularity 226, the time period 228, or a combination thereof.

The filter 242 is configured to aggregate data, such as the navigation system quality information 110, the aggregated data 214, or a combination thereof. In some examples, the filter 242 is configured to filter the navigation system quality information 110 to remove (e.g., discard) on-ground information, such as information that is associated with an aircraft that is not in-flight. After the on-ground information is removed, the aggregator 240 may aggregate the remaining navigation system quality information 110. As another example, the filter 242 is configured to filter the aggregated data 214 based on one or more of the multiple data sources 260, such as the second data source 264, to generate the navigation signal interference map information 112. To illustrate, the second data source 264 may include or correspond to an RAIN data source, a SWIM data source, or a combination thereof. In some implementations, the data may indicate one or more areas of poor-quality navigation signals based on or in association with a position of one or more satellites of the GNSS 106. In some such implementations, to generate the navigation signal interference map information 112, the filter 242 is configured to filter the aggregated data 214 remove (e.g., discard) data that corresponds poor quality navigation signals based on the position of one or more satellites of the GNSS 106.

The map generator 244 is configured to generate a map based on the navigation signal interference map information 112. Although the map generator 244 is described as being included in the computing device 102, in other implementations, the map generator 244 may additionally or alternatively be included in the device 280. Examples of one or more maps generated by the map generator 244 are described further herein at least with reference to FIGs. 5-9, 12, or 13.

The source identifier 246 is configured to determine the interference source 221 that indicates a location of a source of interference. For example, the source identifier 246 may be configured to perform a pattern search on the navigation signal interference map information 112 to identify a source of interference. To illustrate, the source identifier 246 can, for a geographic area and for each vertical level of a set of vertical levels, determine, based on the navigation signal interference map information 112, an interference value associated with the vertical level. The source identifier 246 then performs a comparison between the set of interference values of the set of vertical levels and an interference pattern, such a pattern of the one or more models or patterns 220. The source identifier 246 may identify the source of interference based on a result of the comparison, such as a result that indicates that the set of interference values of the set of vertical levels matches the interference pattern. Additionally, or alternatively, in some other implementations, source identifier 246 applies a model (of the one or more models or patterns 220) to the navigation signal interference map information 112 to identify the source of interference. To illustrate, the model may be a trained model that is configured to determine the source of interference based on the navigation signal interference map information 112. For example, the model may include one or more artificial intelligence (Al) or machine learning (ML) models.

The spoofing identifier 248 is configured to determine the spoofing information 225 that indicates an area having spoofing navigation signals. It is noted that a spoofing attack may be difficult for an aircraft (e.g., the aircraft 103) to detect based on ADS-B generated by the aircraft. However, the presence of spoofing signals can occur after a jamming attack in which a GNSS receiver is unlocked (e.g., disconnected) from navigation signals from a GNSS and then connected to a spoofing signal after the attack to a spoofing signal that is received at the GNSS receiver with more power than the navigation signals from the GNSS. Accordingly, the spoofing identifier 248 may attempt to detect spoofing signals in association with a jamming attack. For example, the spoofing identifier 248 may identify, based on the navigation signal interference map information 112, a spoofing navigation signal. To illustrate, the spoofing identifier 248 can identify, based on the navigation signal interference map information 112, an area having a jamming event associated with radio frequency interference of one or more navigation signals. In some implementations, the spoofing identifier 248 determines a first signal quality value a first navigation signal associated with the area prior to the jamming event. The spoofing identifier 248 identifies an end of the jamming event and determines a second signal quality value of a second navigation signal associated with the area after the end of the jamming event. The spoofing identifier 248 performs a comparison based on the first signal quality value and the second signal quality value, and may determine whether the second navigation signal is the spoofing navigation signal based on a result of the comparison. To illustrate, the spoofing identifier 248 may determine that the area includes the spoofing navigation signal based on the result indicating that the second signal quality value is greater than the first signal quality value.

The system 200 can also include components not illustrated in FIG. 2. For example, the computing device 102 can also include a receiver configured to receive the navigation system quality information 110 from the multiple data sources 260. As an additional example, the system 200 can also include one or more input/output interfaces, one or more network interfaces, etc. Further, although FIG. 2 illustrates the memory 206 as storing certain data, more, fewer, and/or different data can be present within the memory 206 without departing from the scope of the subject disclosure.

Additionally, although FIG. 2 illustrates certain operations occurring within the computing device 102, these operations can be performed by other components of the system 200 without departing from the scope of the subject disclosure. For example, one or more components external to the computing device 102 can be configured to host or otherwise incorporate some or all of the navigation system quality information 110, the parameter 212, the aggregated data 214, the navigation signal interference map information 112, the data integrity event information 218, the one or more models or patterns, the interference source 221, the spoofing information 225, or a combination thereof. Such component(s) can be located remotely from the computing device 102 and accessed via a modem of the computing device 102.

Further, although FIG. 2 illustrates the computing device 102 and multiple data sources 260 and the device 280 as separate, other configurations are possible without departing from the scope of the subject disclosure. For example, the computing device 102 can be integrated into the device 280, such as an air traffic control approval system. As an additional example, one or more components of the computing device 102 can be distributed across a plurality of computing devices (e.g., a group of servers).

In some implementations, the device 280 may request the navigation signal interference map information 112, the data integrity event information 218, the interference source 221, the spoofing information 225, or a combination thereof, from the computing device 102. The request may include the parameter 212, such as a value of the threshold 222, the area size 224, the vertical granularity 226, the time period 228, or a combination thereof.

In some implementations, the device 280 may be configured to generate a map based on the navigation signal interference map information 112, the data integrity event information 218, the interference source 221, the spoofing information 225, or a combination thereof. For example, the map may include or correspond to one or more maps described further herein at least with reference to FIGs. 5-9, 12, or 13. In some implementation, the device 280 may select or adjust the parameter 212 in association with the navigation signal interference map information 112, the data integrity event information 218, the interference source 221, the spoofing information 225, or a combination thereof, received from the computing device 102. Accordingly, an operator of the device 280 may be able to adjust the map to identify information of interest to the operator.

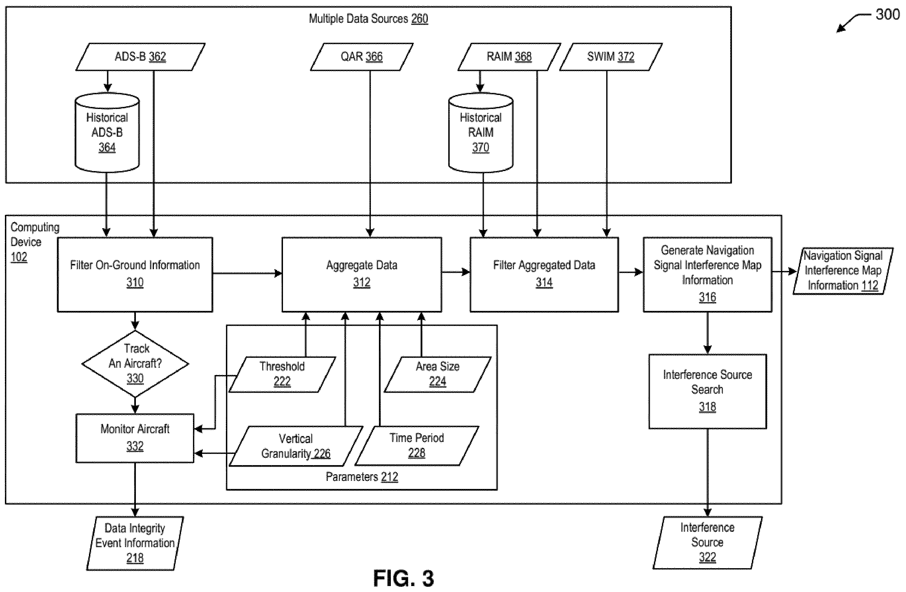

Referring to FIG. 3, FIG. 3 is a functional diagram that illustrates an example of a system 300 configured to identify interference associated with navigation signals, in accordance with some examples of the subject disclosure. The system 300 may include or correspond to the system 100 or 200. The system 300 includes the computing device 102 and the multiple data sources 260. The computing device 102 may be configured to communicate with the multiple data sources 260 and another device, such as the device 280, via one or more networks.

The multiple data sources 260 include an ADS-B data source 362, a historical ADS-B data source 364, a QAR data source 366, an RAIM data source 368, a historical RAIM data source 370, an SWIM data source 372, or a combination thereof. In some implementations, the ADS-B data source 362, the historical ADS-B data source 364, the QAR data source 366, or a combination thereof, correspond to the first data source 262. Additionally, or alternatively, the RAIM data source 368, the historical RAIM data source 370, the SWIM data source 372, or a combination thereof, correspond to the second data source 264.

The computing device 102 is configured to receive first data from the ADS-B data source 362, the historical ADS-B data source 364, or a combination thereof. For example, the first data may be received by the processor 208, the memory 206, or a combination thereof. In some implementations, the first data includes one or more ADS-B reports. The first data may include or correspond to at least a first portion of the navigation system quality information 110. Data from the ADS-B data source 362 may include real-time or near real-time data and data from the historical ADS-B data source 364 may include previously generated (e.g., non-real-time) ADS-B data reports. An ADS-B report may include information about GNSS position uncertainty. To illustrate, typical indicators of the GNSS position uncertainty include NIC, NACp, or a combination thereof.

At block 310, the computing device 102 is configured to filter on-ground information from the first data. For example, the processor 208 of FIG. 2 (e.g., the filter 242 of FIG. 2) may remove one or more ADS-B reports associated with an on-ground aircraft from the first data to generate filtered first data.

At block 312, the computing device 102 is configured to aggregate the filtered first data. For example, the computing device 102 (e.g., the aggregator 240) may aggregate the filtered first data to generate the aggregated data 214. To illustrate, the computing device 102 may aggregate the filtered first data based on the parameter 212. In some implementations, the filtered first data is aggregated based on the time period 228, such as an hour.

In some implementations, the computing device 102 may also receive QAR data from a QAR data source 366. The QAR data may also be aggregated with the filtered first data to generate the aggregated data 214. In some implementations, the aggregated data 214 is aggregated into one or more areas based on the area size 224 such that the aggregated data 214 has a resolution that is less than or equal to an ADS-B receiver detection range and/or standard airway separation. In some implementations, the aggregated data 214 is generated according to or based on a geospatial indexing system, such as H3 - a hexagonal hierarchical geospatial indexing - developed by Uber, as an illustrative, non-limiting example.

The computing device 102 is configured to receive second data from the RAIM data source 368, the historical RAIM data source 370, the SWIM data source 372, or a combination thereof. For example, the second data may be received by the processor 208, the memory 206, or a combination thereof. In some implementations, the second data includes one or more RAIM data (e.g., GNSS outage(s) information) or RAIM predictions (e.g., low quality prediction information based on the satellite constellation position). The second data may include or correspond to at least a second portion of the navigation system quality information 110. Data from the RAIM data source 368 may include real-time or near real-time data and data from the historical RAIM data source 370 may include previously generated (e.g., non-real-time) RAIM data.

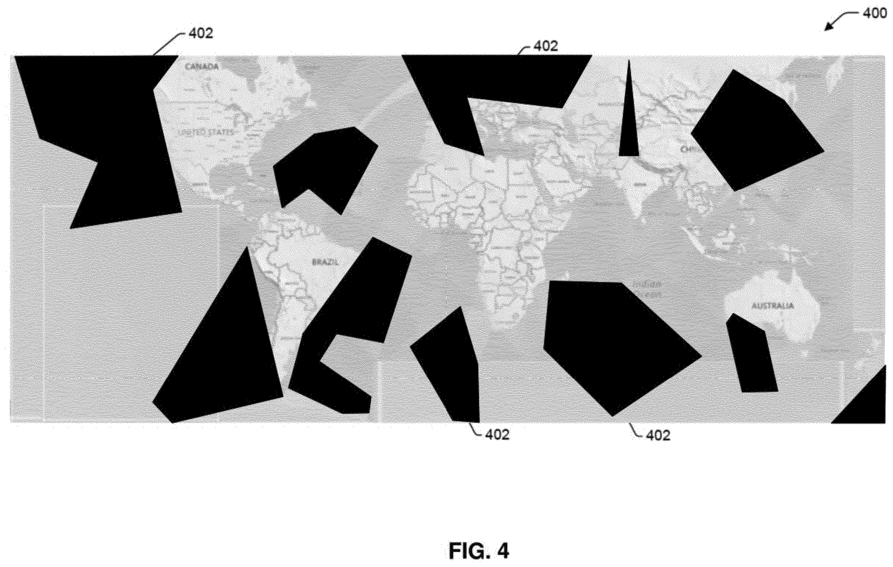

Referring to FIG. 4, FIG. 4 is a diagram that illustrates an example of a map 400 that represents predicted satellite coverage of a navigation system, in accordance with some examples of the subject disclosure. For example, the predicted satellite coverage may be based on RAIM data from the RAIM data source 368, the historical RAIM data source 370, or a combination thereof. The map 400 indicates, using shading, a degree of low-quality navigation signals where one or more areas 402 (shaded black) are identified that have or are predicted to have a GNSS outage or navigation signals less than or equal to a threshold because of satellite constellation positioning.

Referring back to FIG. 3, at block 314, the computing device 102 is configured to filter the aggregated data 214 based on the second data. For example, the processor 208 (e.g., the filter 242) may remove data associated with one or more areas (e.g., the one or more areas 402) that have or are predicted to have a GNSS outage or navigation signals less than or equal to a threshold. Accordingly, data from low quality areas is removed that can be attributed to satellite movement and not because of interference/jamming to thereby reduce or eliminate false positive of jamming. By removing the data associated with one or more geographic areas (e.g., the one or more areas 402), the computing device 102, at block 316, may be configured to generate the navigation signal interference map information 112. The computing device 102 may also output the navigation signal interference map information 112. For example, the navigation signal interference map information 112 may be output to another device, such as the aircraft 103, the device 280, or a combination thereof. The other device may generate or present an interference map based on the navigation signal interference map information 112.

At block 318, the computing device 102 is configured to perform an interference source search. For example, the computing device 102 (e.g., the source identifier 246 or the spoofing identifier 248) may perform the interference source search to identify or generate interference source 322 (e.g., interference source information). The interference source 322 may indicate a location of a source of interference or an area in which spoofing navigation signals are present. For example, the interference source 322 may include or correspond to the interference source 221 or the spoofing information 225. To illustrate, the computing device 102 may perform interference source search on the navigation signal interference map information 112 using one or more models or patterns 220. The computing device 102 may also output the interference source 322. For example, the interference source 322 may be output to another device, such as the aircraft 103, the device 280, or a combination thereof. The other device may generate or present a map, such as the interference map, that indicates, based on the interference source 322, a location of a source of interference or an area in which spoofing navigation signals are present.

In some implementations, one or more operations described with reference to the block 312, the block 314, the block 316,the block 318, or a combination thereof, may be performed in real-time or near-real-time. For example, the computing device 102 may generate and output the navigation signal interference map information 112, the interference source 322, or a combination thereof to another device.

In some implementations, at block 330, the computing device 102 is configured to determine whether or not to track an aircraft, such as an in-flight aircraft. For example, the in-flight aircraft may include or correspond to the aircraft 103.

At block 332, the computing device 102 is configured to monitor the aircraft. For example, the computing device 102 may track and/or monitor the aircraft to identify whether the aircraft is experiencing jamming of navigation signals. To illustrate, the computing device 102 may monitor the aircraft based on ADS-B data, QAR data, or a combination thereof, received from the aircraft. As part of monitoring the aircraft, the computing device 102 may compare navigation signal quality information (from the ADS-B data, QAR data, or a combination thereof) to a threshold to identify the data integrity event information 218. For example, the computing device 102 may determine that the aircraft is experiencing jamming of navigation signals based on the navigation signal quality information being less than or equal to the threshold. The computing device 102 may also output the data integrity event information 218. For example, the data integrity event information 218 may be output to another device, such as the aircraft 103, the device 280, or a combination thereof. The other device may generate or present a map, such as the interference map, that indicates, based on the data integrity event information 218, that the aircraft is experiencing interference of navigation signals. In some implementations, the map may indicate a level of interference along a flight path of the aircraft.

As described with reference to FIG. 3, the present disclosure provides techniques to support identification of interference associated with navigation signals. For example, the navigation signal interference map information 112 can indicate one or more areas (and airspace above the one or more areas) of degradation of navigation signals of the GNSS. The navigation signal interference map information 112 can enable an operator of a GNSS receiver to determine when the GNSS receiver is in proximity to an affected area and use conventional navigation aids, other than the GNSS receiver, to determine position information, navigation information, timing information, or a combination thereof. Additionally, or alternatively, the present disclosure provides identification of a location of a source that is producing gamming signals and/or an area that includes spoofing signals. In some implementations, the present disclosure may also receive the navigation system quality information 110 from the multiple data sources 260 and aggregate the data to identify one or more areas in which jamming is occurring. The present disclosure may also provide the navigation signal interference map information 112, the interference source 322, and/or the data integrity event information 218 to a device (e.g., the aircraft 103 and/or the device 280) to enable to the device to generate a map or an alert that may be used by an operator of the device.

Referring to FIG. 5, FIG. 5 is a diagram that illustrates an example of a representation 500 of an area to indicate interference associated with navigation signals, in accordance with some examples of the subject disclosure. For example, the area may correspond to a geographic area or region that is included in a map, such as an interference map that is generated based on the navigation signal interference map information 112. In some implementations the representation is based on or associated with a geospatial indexing system, such as H3-a hexagonal hierarchical geospatial indexing-developed by UBER (UBER is a registered trademark of Uber Technologies, Inc., a Delaware Corporation), as an illustrative, non-limiting example.

The representation 500 has a shape, such as a triangle, a square, a circle, pentagon, a hexagon, or other shape, as illustrative, non-limiting examples. In some implementations, the shape includes at least one side having a length that is associated with or indicated by the area size 224 of FIG. 2. In some implementations, each side of the area is the same length.

The representation 500 may include one or more layers (e.g., one or more vertical layers corresponding to an airspace above a surface). In some implementations, a number (e.g., a count) of the one or more layers is associated with or indicated by the vertical granularity 226. For example, as shown, the representation 500 includes three layers: a first layer 502, a second layer 504, and a third layer 506. Each layer of the one or more layers corresponds to a different altitude (e.g., height) above the area. To illustrate, the first layer 502 may correspond to an altitude of 0-15,000 feet (ft), the second layer 504 may correspond to an altitude of 15,000-30,000 ft, and the third layer 506 may correspond to an altitude of 30,000-45,000 ft. Additionally, or alternatively, each layer may be colored, shaded, and/or cross-hatched to indicate a quality value, such as a quality value of navigation signals. In some implementations, each layer of the one or more layers of the representation 500 indicates the same quality value. In other implementations, at least one layer of the one or more layers of the representation 500 indicates a different quality value from another layer of the one or more layers of the representation 500. In some implementations, the representation 500 may have a single layer and the single layer may be two-dimensional or three-dimensional.

Referring to FIG. 6, FIG. 6 is a diagram that illustrates an example of a map 600 that represents interference associated with navigation signals, in accordance with some examples of the subject disclosure. The map 600 may include an interference map that is generated based on the navigation signal interference map information 112.

The map 600 includes a geographic region 602 and a legend 604. The legend 604 indicates a color, shading, cross-hatching, or a combination thereof, for different values of quality of navigation signals of a GNSS, such as the GNSS 106. In some implementations, the values of the navigation signals range from 0-11, where 0 indicates poor or bad quality and 11 indicates good quality. Additionally, or alternatively, the values may be associated with or defined by 14 CFR § 91.227. It is noted that the map 600 and the legend 604 may include a portion of the range, such as values that are less than or equal to 6.5 as shown in FIG. 6.

The geographic region 602 may include or indicate representations 605 of multiple areas, such as a first representation 605A, a second representation 605B, a third representation 605C, and fourth representation 605D. The representations 605 may include or correspond to the representation 500. As shown, each representation 605 includes multiple layers. The multiple layers may include or correspond to the one or more layers 502-506 of FIG. 5. The first representation 605A corresponds to a quality value between 6.25 to 6.5, the second representation 605B corresponds to a quality value between 5.7 to 6.25, and the third representation 605C corresponds to a quality value between 5.7 to 1. The fourth representation 605D includes a first layer 606 that corresponds to a quality value between 6.25 to 6.5 and a second layer 608 that corresponds to a quality value between 5.7 to 6.25.

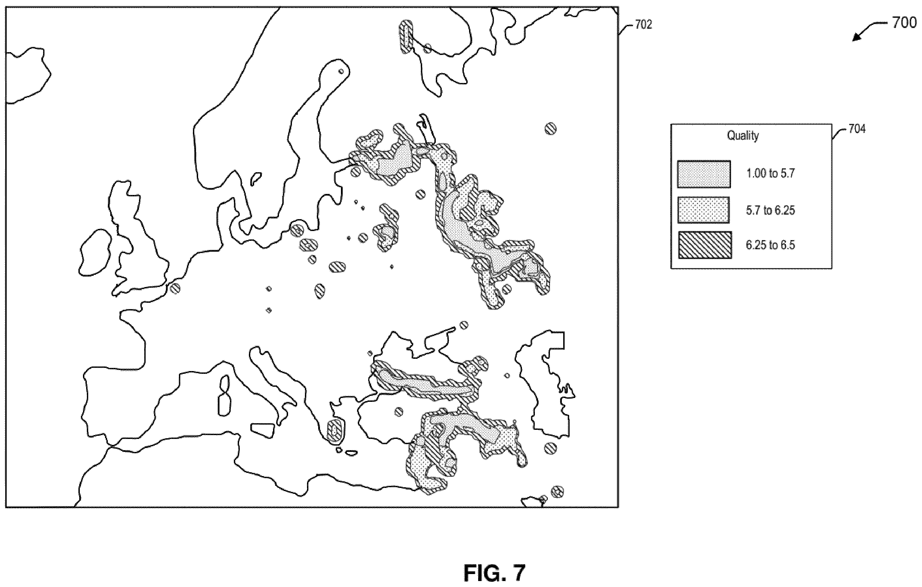

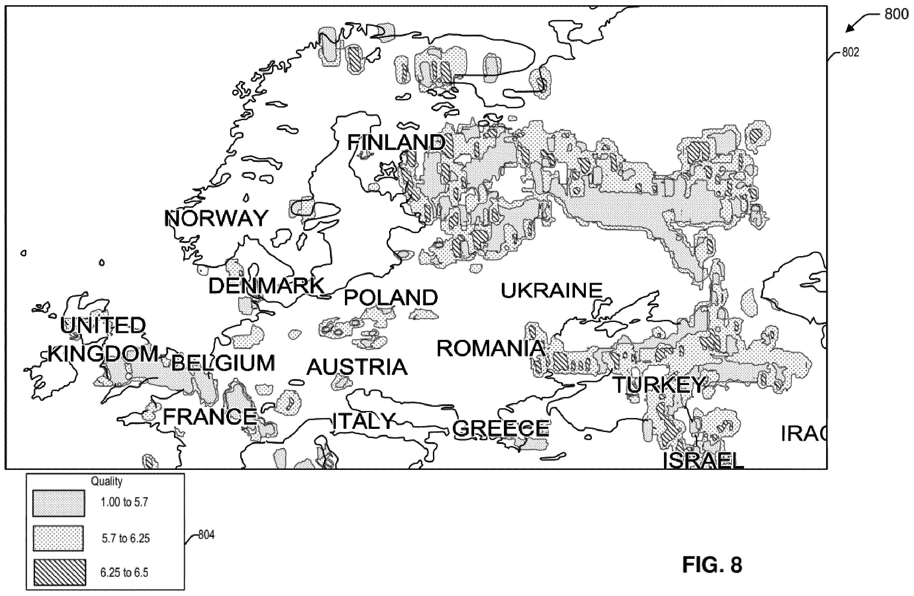

Referring to FIGs. 7 and 8, FIGs. 7 and 8 are diagrams of examples of maps that represent interference associated with navigation signals, in accordance with some examples of the subject disclosure. FIG. 7 is a diagram that illustrates another example of a map 700, and FIG. 8 is a diagram that illustrates a further example of a map 800.

The maps 700, 800 may include an interference map that is generated based on the navigation signal interference map information 112. For example, the maps 700, 800 may include or correspond to the map 600. Each of the maps 700, 800 include a geographic region and a legend. For example, the map 700 includes a geographic region 702 and a legend 704, and the map 800 includes a geographic region 802 and a legend 804. The legends 704, 804 may include or correspond to the legend 604.

The map 700 has a first resolution, and the map 800 has a second resolution To illustrate, each of the maps 700, 800 may be associated with the same time period (e.g., the time period 228 of FIG. 2), and the second resolution is a higher resolution than the first resolution. For example, the first resolution may be associated with a first value of parameter 212 and the second resolution may be associated with a second value of parameter 212. In some implementations, the parameter 212 is the vertical granularity 226. Additionally, or alternatively, the parameter 212 is the area size 224. In some implementations, the parameter 212 is set by the computing device 102, the aircraft 103, the device 280, or a user thereof.

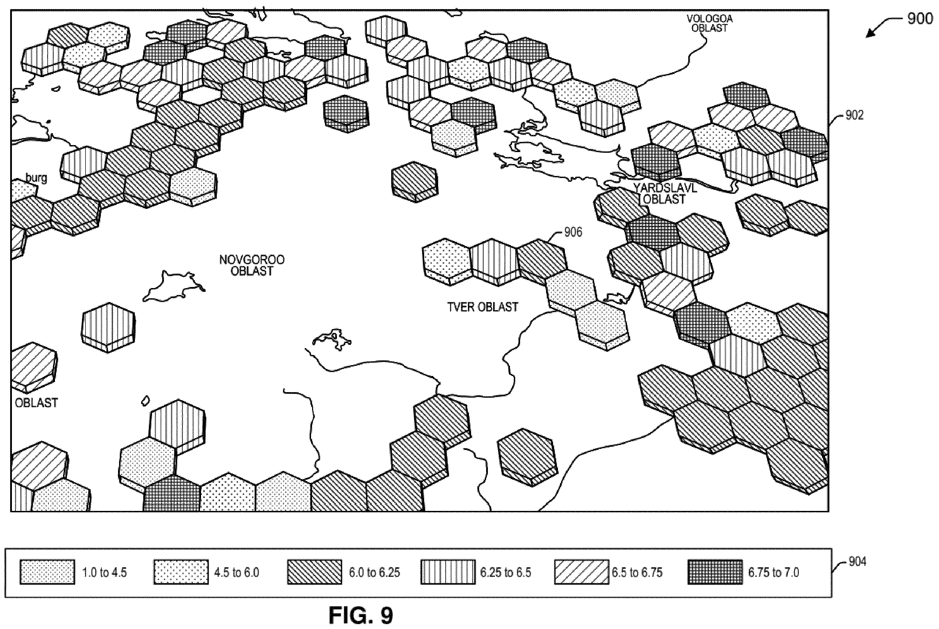

FIG. 9 is diagram that illustrates an additional example of a map 900 that represents interference associated with navigation signals, in accordance with some examples of the subject disclosure. The map 900 may include an interference map that is generated based on the navigation signal interference map information 112. The map 900 may include or correspond to the map 600, 700, or 800. In some implementations, the map 900 has a third resolution. As compared to the map 700 having a first resolution and/or the map 800 having a second resolution, the third resolution of the map 900 is a higher resolution than the first resolution and/or the second resolution.

The map 900 includes a geographic region 902 and a legend 904. The geographic region 902 may include or correspond to the geographic region 602, 702, or 802. The legend 904 may include or correspond to the legend 604, 704, or 804.

The legend 904 indicates a color, shading, cross-hatching, or a combination thereof, for different values of quality of navigation signals of a GNSS, such as the GNSS 106. In some implementations, the values of the navigation signals range from 0-11, where 0 indicates poor or bad quality and 11 indicates good quality. Additionally, or alternatively, the values may be associated with or defined by 14 CFR § 91.227. It is noted that the map 900 and the legend 904 may include a portion of the range, such as values that are less than or equal to 7.0 as shown in FIG. 9.

The geographic region 902 may include or indicate representations of multiple areas, such as a representative representation 906. The representation 906 may include or correspond to the representation 500 or 605. The representation 906 may include one or more layers.

Referring to FIG. 10, FIG. 10 is a diagram that illustrates an example of a graph 1000 of factors associated with jamming interference, in accordance with some examples of the subject disclosure. Jamming signals (e.g., interference that is ground based or air/space based) may be generated based on a source emitting jamming signals with high power to disrupt GNSS-based equipment onboard an aircraft, such as the aircraft 103 of FIG. 1. In free-space conditions, the jamming signal can propagate according to the Friis transmission formula such that the power received at an antenna of the aircraft is proportional to the inverse square of the distance. Accordingly, the farther the jamming signal propagates from a source across a range of altitudes, higher power is needed to account for dispersion of the jamming signal and for the jamming signal to have a desired interfering effect of damaging or disrupting navigation signals of a GNSS, such as navigation signals of the GNSS 106.

Referring to the graph 1000 of FIG. 10, the graph 1000 depicts an example of jamming power in Watts (W) need for a complete extinction of navigation signals with respect to distance in meters (m) and altitude in feet (ft) from a jamming source. To generate the graph 1000, -30 dBm was used as a threshold power for the complete extinction of navigation signals. In the graph 1000, jamming power levels below 1 W are depicted with triangles, jamming power levels between 1 W and 5 W are depicted with rectangles, and jamming power levels above 5 W are depicted with circles.

Referring to FIG. 11, FIG. 11 is diagram that illustrates an example of a jamming pattern 1100 generated by a jamming source, in accordance with some examples of the subject disclosure. The jamming pattern 1100 may include or correspond to the one or more models or patterns 220.

The jamming pattern 1100 is associated with jamming signals that are emitted from a source 1101. The jamming signals propagate through different altitudes as indicated by a first area 1102 at a first altitude, a second area 1104 at a second altitude, and a third area 1106 at a third altitude. It is noted that each of the first area 1102, the second area 1104, and the third area 1106 are associated with different vertical layers of the same area. Stated differently, the first area 1102, the second area 1104, and the third area 1106 of the jamming pattern 1100 are associated with vertical granularity, such as the vertical granularity 226 of FIG. 2. It is noted that the jamming pattern 1100 of the jamming signals is generally considered to be a conical pattern. Accordingly, a cross-section of the jamming pattern 1100 at the first area 1102 is smaller than a cross-section of the jamming pattern 1100 at the second area 1104 and/or the third area 1106.

In order to detect a source of interference (e.g., a source indicated by interference source 221 of FIG. 2), the computing device 102, such as the source identifier 246, may process or search the navigation signal interference map information 112 based on the jamming pattern 1100. As an illustrative example, the computing device 102 (e.g., the source identifier 246) may perform by iterating a lower level layer (of multiple layers which may be based on the vertical granularity 226) to search for a highly jammed area, such as an area having a quality value that is less than or equal to 7. Each highly jammed area may be considered a candidate area. For each candidate area, the computing device 102 (e.g., the source identifier 246) may analyze one or more layers (e.g., an area above and/or one or more neighboring areas) in a next layer in order to identify dispersion of the interference. The computing device 102 (e.g., the source identifier 246) may iteratively continue to analyze each layer to identify a dispersion pattern that provides a match to the jamming pattern 1100 (e.g., the one or more models or patterns 220). Based on detected match, the computing device 102 (e.g., the source identifier 246) may identify a candidate area as being associated with a location of a source of interference. It is noted that although the computing device 102 (e.g., the source identifier 246) is described as analyzing the one or more layers from a lower layer to a higher layer, the computing device 102 (e.g., the source identifier 246) may also analyze the one or more layers from a higher layer to a lower layer to identify a source of interference that is air or space based.

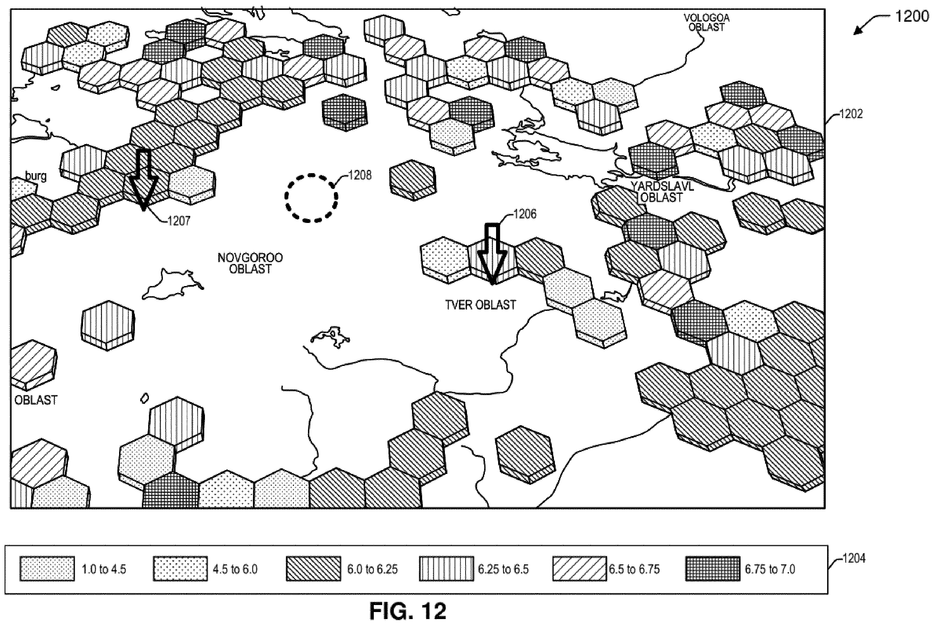

FIG. 12 is diagram that illustrates an example of a map 1200 that represents interference associated with navigation signals, in accordance with some examples of the subject disclosure. The map 1200 corresponds to the map 900 of FIG. 9. The map 1200 includes a geographic region 1202 and a legend 1204. The geographic region 1202 may include or correspond to the geographic region 602, 702, 802, or 902. The legend 1204 may include or correspond to the legend 604, 704, 804, or 904.

As compared to the map 900, the map 1200 indicates a first location 1206 of a first source of interference, a second location 1207 of a second source of interference, and an area 1208 in which spoofing signals are present. The first location 1206 and the second location 1207 may include or correspond to the interference source 221, the interference source 322, or a combination thereof. The area 1208 in which the spoofing signals are present may include or correspond to the spoofing information 225, the interference source 322, or a combination thereof.

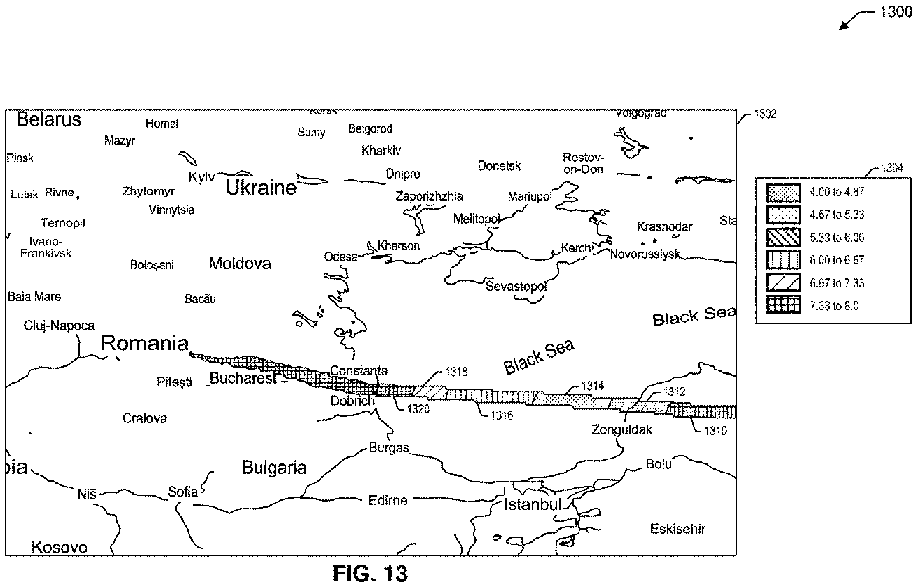

Referring to FIG. 13, FIG. 13 is diagram that illustrates an example of a map 1300 that represents interference associated with navigation signals for an aircraft. The map 1300 may include or be generated based on the navigation signal interference map information 112, the data integrity event information 218, or a combination thereof.

The map 1300 includes a geographic region 1302 and a legend 1304. The geographic region 1302 may include or correspond to the geographic region 602, 702, 802, or 902. The legend 1304 may include or correspond to the legend 604, 704, 804, or 904. The legend 904 indicates a color, shading, cross-hatching, or a combination thereof, for different values of quality of navigation signals of a GNSS, such as the GNSS 106. In some implementations, the values of the navigation signals range from 0-11, where 0 indicates poor or bad quality and 11 indicates good quality. Additionally, or alternatively, the values may be associated with or defined by 14 CFR § 91.227. It is noted that the map 900 and the legend 904 may include a portion of the range, such as values that are less than or equal to 8.0 as shown in FIG. 13.

As shown, the map 1300 indicates areas of different values of quality of navigation signals along a flight path of an aircraft, such as the aircraft 103 of FIG. 1, from East to West. For example, the areas include a first area 1310 associated with a quality value between 7.33 to 8.0, a second area 1312 associated with a quality value between 4.00 to 4.67, a third area 1314 associated with a quality value between 4.67 to 5.33, a fourth area 1316 associated with a quality value between 6.00 to 6.67, a fifth area 1318 associated with a quality value between 6.67 to 7.33, and a sixth area 1320 associated with a quality value between 7.33 to 8.0.

In some implementations, the navigation signal interference map information 112, the data integrity event information 218, or a combination thereof, associated with the map 1300 are generated in real-time for the aircraft 103. To illustrate, the computing device 102 may monitor the aircraft 103 based on ADS-B data (e.g., NIC data), QAR data, or a combination thereof, received from the aircraft 103. The computing device 102 may generate and/or transmit an alert based on a change in quality of navigation signals received by the aircraft. The computing device 102 may detect a change with respect to the aircraft 103 traveling along the flight path and generate an alert that indicates the change in quality, such as a decrease in quality or an increase in quality. As a first illustrative example, the computing device 102 may detect a change with respect to the aircraft 103 traveling from the first area 1310 to the second area 1312 and generate a first alert that indicates a decrease in quality. As another illustrative example, the computing device 102 may detect a change with respect to the aircraft 103 traveling from the fifth area 1318 to the sixth area 1320 and generate a second alert that indicates an increase in quality. In some implementations, the alerts may be generated and/or transmitted to the aircraft 103, the device 280, or a combination thereof.

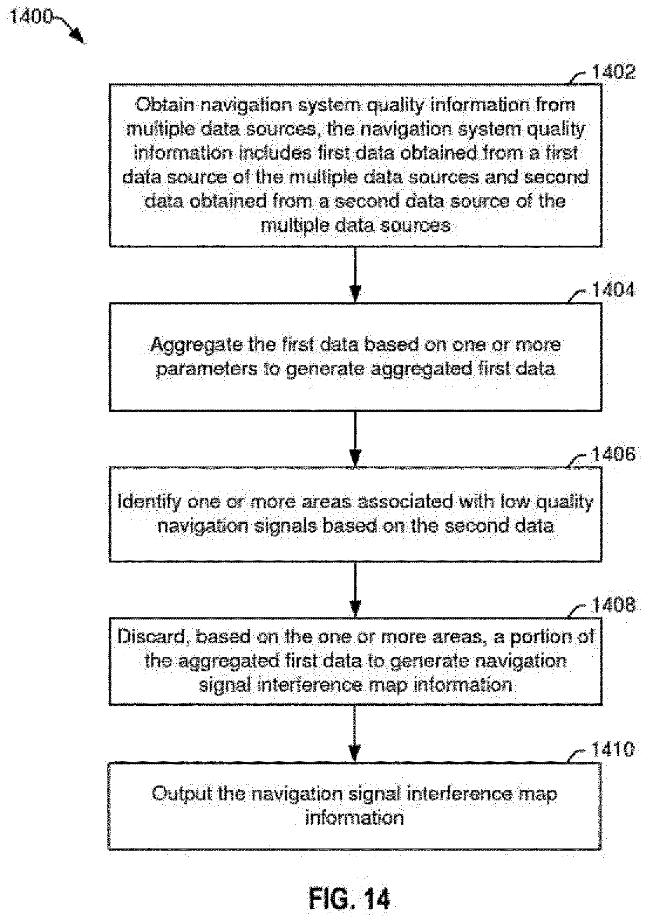

FIG. 14 is a flowchart that illustrates an example of a method 1400 of identifying interference associated with navigation signals, in accordance with some examples of the subject disclosure. The method 1400 can be initiated, performed, or controlled by one or more processors executing instructions, or by circuitry configured to cause performance of one or more operations, such as resides within the computing device 102, the processor 208, or a combination thereof.

In some implementations, the method 1400 includes, at block 1402, obtaining navigation system quality information from multiple data sources. For example, the multiple data sources include or correspond to the data source 105 or 108, the multiple data sources 260 (e.g., the first data source 262 or the second data source 264), the ADS-B data source 362, the historical ADS-B data source 364, the QAR data source 366, the RAIM data source 368, the historical RAIM data source 370, the SWIM data source 372, or a combination thereof. The navigation system quality information includes or corresponds to the navigation system quality information 110. The navigation system quality information includes first data obtained from a first data source of the multiple data sources and second data obtained from a second data source of the multiple data sources. For example, the first data source may include or correspond to the first data source 262, the ADS-B data source 362, the historical ADS-B data source 364, the QAR data source 366, or a combination thereof. The second data source may include or correspond to the second data source 264, the RAIM data source 368, the historical RAIM data source 370, the SWIM data source 372, or a combination thereof.

In some implementations, the method 1400 includes obtaining the first data from the navigation system quality information. For example, the first data source of the multiple data sources includes the first data. The first data source of the multiple data sources includes an ADS-B data source (e.g., the ADS-B data source 362, the historical ADS-B data source 364), a QAR data source (e.g., the ADS-B data source 362, the historical ADS-B data source 364), or a combination thereof. In some examples, the first data source includes the ADS-B data source. Additionally, or alternatively, the first data includes NIC data, NACp data, or a combination thereof.

In some implementations, the method 1400 includes obtaining the second data from the navigation system quality information. For example, the second data source of the multiple data sources includes the second data. The second data source of the multiple data sources includes a RAIM data source (e.g., the RAIM data source 368 or the historical RAIM data source 370), a SWIM data source (e.g., the SWIM data source 372), or a combination thereof. In some examples, the second data source includes the RAIM data source. Additionally, or alternatively, the first data has a first data type and the second data has a second data type. The second data type may be different from the first data type.

The method 1400 also includes, at block 1404, aggregating the first data based on one or more parameters to generate aggregated first data. To illustrate, the aggregator 240 may generate the aggregated first data. For example, the aggregated first data may include or correspond to the aggregated data 214. The one or more parameters may include or correspond to the parameter 212, the threshold 222, the area size 224, the vertical granularity 226, the time period 228, or a combination thereof.

The method 1400 also includes, at block 1406, identifying one or more areas associated with low quality navigation signals based on the second data. The one or more areas may include or correspond to the area 402.

The method 1400 includes, at block 1408, discarding, based on the one or more areas, a portion of the aggregated first data to generate navigation signal interference map information. To illustrate, the filter 242 may discard the portion of the aggregated first data. The navigation signal interference map information includes a remainder of the aggregated first data after the portion of the aggregated first data is discarded. For example, the navigation signal interference map information may include or correspond to the navigation signal interference map information 112. The navigation signal interference map information indicates areas of degradation of navigation signals of a GNSS, such as the GNSS 106. For example, the navigation signal interference map information indicates areas of radio frequency interference associated with navigation signals of the GNSS.

The method 1400 includes, at block 1410, outputting the navigation signal interference map information. For example, the navigation signal interference map information may be output to the aircraft 103, the device 280, or a combination thereof.

In some implementations, the method 1400 includes filtering on-ground data from the first data to generate filtered first data. To illustrate, the filter 242 may filter the on-ground data to generate the filtered first data. In some such implementations, the method 1400 may include aggregating the filtered first data based on one or more parameters to generate the aggregated first data. To illustrate, the aggregator 240 may aggregate the filtered first data to generate the aggregated first data, such as the aggregated data 214.

In some implementations, the method 1400 includes identifying an in-flight aircraft associated with at least a portion of the filtered first data. The in-flight aircraft may include or correspond to the aircraft 103 or the device 280. In some such implementations, the method 1400 further includes obtaining additional data associated with the in-flight aircraft from the ADS-B data source, and comparing the additional data and an integrity threshold. For example, the integrity threshold may include or correspond to the threshold 222. Based on the additional data satisfying (e.g., being less than or equal to) the integrity threshold, a notification of a data integrity event is generated. The method 1400 can also include transmitting the notification. For example, the notification may be transmitted to the in-flight aircraft or another device. The notification of the data integrity event may include or correspond to the data integrity event information 218.

In some implementations, the method 1400 includes performing a pattern search on the navigation signal interference map information to identify a source of interference. To illustrate, the source identifier 246 may perform the pattern search on the navigation signal interference map information 112. For example, the pattern may include or correspond to the one or more models or patterns 220. In some implementations, the method 1400 generates interference source information that indicates a location of the source of interference. The source information may include or correspond to the interference source 221. The method 1400 may include outputting the interference source information with the navigation signal interference map information. In some implementations, to perform the pattern search, the method 1400 includes, for a geographic area and for each vertical level of a set of vertical levels of the geographic area, determining, based on the navigation signal interference map information, an interference value associated with the vertical level. The method 1400 may perform a comparison between the set of interference values of the set of vertical levels and an interference pattern. The source of interference may be identified based on a result of the comparison.

In some implementations, the method 1400 includes identifying, based on the navigation signal interference map information, a spoofing navigation signal. To illustrate, the spoofing identifier 248 may identify the spoofing navigation signal, such as spoofing information 225. To identify the spoofing navigation signal, the method 1400 may include identifying, based on the navigation signal interference map information, an area having a jamming event (e.g., a degradation of navigation signals of a GNSS) associated with radio frequency interference of one or more navigation signals. Based on the identified jamming event, the method 1400 determine a first signal quality value a first navigation signal associated with the area prior to the jamming event. The method 1400 also includes identifying an end of the jamming event, and determining a second signal quality value of a second navigation signal associated with the area after the end of the jamming event. In some implementations, the method 1400 performs a comparison based on the first signal quality value and the second signal quality value, and determines whether the second navigation signal is the spoofing navigation signal based on a result of the comparison. For example, the second navigation signal may be determined to be a spoofing navigation signal based on the result indicating that the second signal quality value is greater than or equal to the first signal quality value.

In some implementations, an interference map is generated based on the navigation signal interference map information. For example, the method 1400 may include generating an interference map based on the navigation signal interference map information. To illustrate, the map generator 244 may generate the interference map. The method 1400 may also include outputting the interference map. In some implementations, the interference map can include multiple hexagonal areas. At least one hexagonal area of the multiple hexagonal areas indicates, for each vertical level of one or more vertical levels of the at least one hexagonal area, a degradation amount of navigation signals at the vertical level. Additionally, or alternatively, the interference may indicate a source of interference, an area having spoofing navigation signals, or a combination thereof.

The method described above with reference to FIG. 14 can be implemented to realize one or more of the technical advantages described in more detail above. For example, the method 1400 can enable identification of interference associated with navigation signals. For example, the navigation signal interference map information can indicate one or more areas (and airspace above the one or more areas) of degradation of navigation signals of the GNSS. Additionally, the navigation signal interference map information can enable an operator of a GNSS receiver to determine when the GNSS receiver is in proximity to an affected area and use conventional navigation aids, other than the GNSS receiver, to determine position information, navigation information, timing information, or a combination thereof. Additionally, or alternatively, the navigation signal interference map information can also include or provide additional information that indicates a location of a source that is producing jamming signals and/or that indicates an area in which spoofing signals are present.

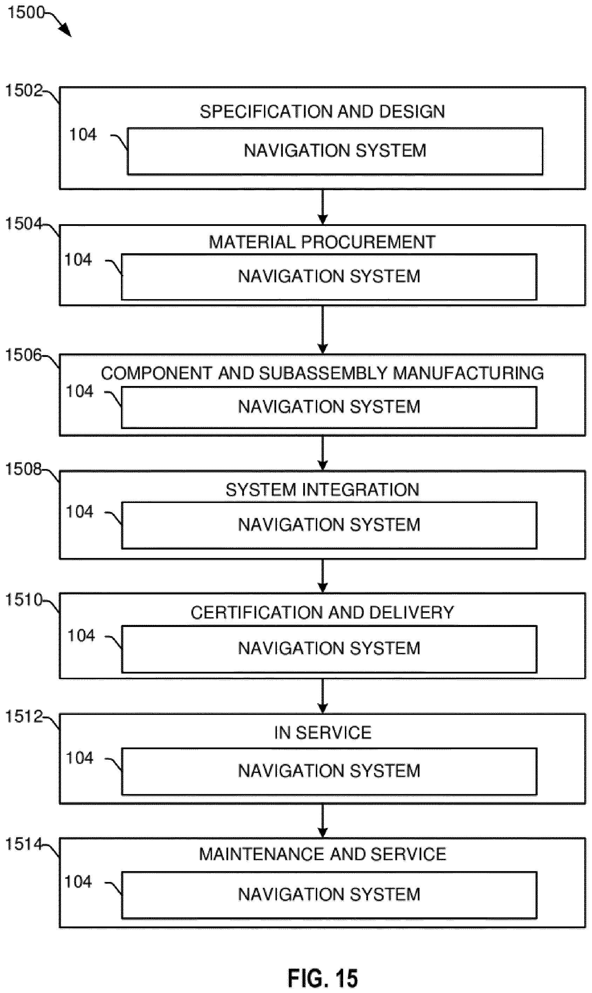

Referring to FIG. 15, a flowchart of an exemplary method 1500 illustrative of a life cycle of the aircraft 103 of FIG. 1. The aircraft 103 includes the navigation system 104.

During pre-production, the exemplary method 1500 includes, at 1502, specification and design of an aircraft, such as the aircraft 103 described with reference to FIG. 1. During specification and design of the aircraft, the method 1500 may include specification and design of the navigation system 104. At 1504, the method 1500 includes material procurement, which may include procuring materials for the navigation system 104.

During production, the method 1500 includes, at 1506, component and subassembly manufacturing and, at 1508, system integration of the aircraft. For example, the method 1500 may include component and subassembly manufacturing of the navigation system 104 and system integration of the navigation system 104. At 1510, the method 1500 includes certification and delivery of the aircraft and, at 1512, placing the aircraft in service. Certification and delivery may include certification of the navigation system 104 to place the navigation system 104 in service. While in service by a customer, the aircraft may be scheduled for routine maintenance and service (which may also include modification, reconfiguration, refurbishment, and so on). At 1514, the method 1500 includes performing maintenance and service on the aircraft, which may include performing maintenance and service on the navigation system 104.

Each of the processes of the method 1500 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

Aspects of the disclosure can be described in the context of an example of a vehicle. A particular example of a vehicle is an aircraft 1600 as shown in FIG. 16.

In the example of FIG. 16, the aircraft 1600 includes an airframe 1618 with a plurality of systems 1620 and an interior 1622. Examples of the plurality of systems 1620 include one or more of a propulsion system 1624, an electrical system 1626, an environmental system 1628, a hydraulic system 1630, and the navigation system 104. Any number of other systems may be included. Any number of other systems can be included and/or one or more of the systems depicted in FIG. 16 may be omitted. In the example of FIG. 16, the navigation system 104 is configured to receive the navigation signal interference map information 112 from the computing device 102. Additionally, or alternatively, navigation system 104 is configured to generate or present an interference map based on the navigation signal interference map information 112. For example, the interference map may include or correspond to one or more of the maps of FIGs. 6-9, 12, or 13. In some implementations, the navigation system 104 is configured to receive a notification of a data integrity event. The notification of the data integrity event may include or correspond to the data integrity event information 218. For example, the navigation system 104 may receive the notification from the computing device 102.

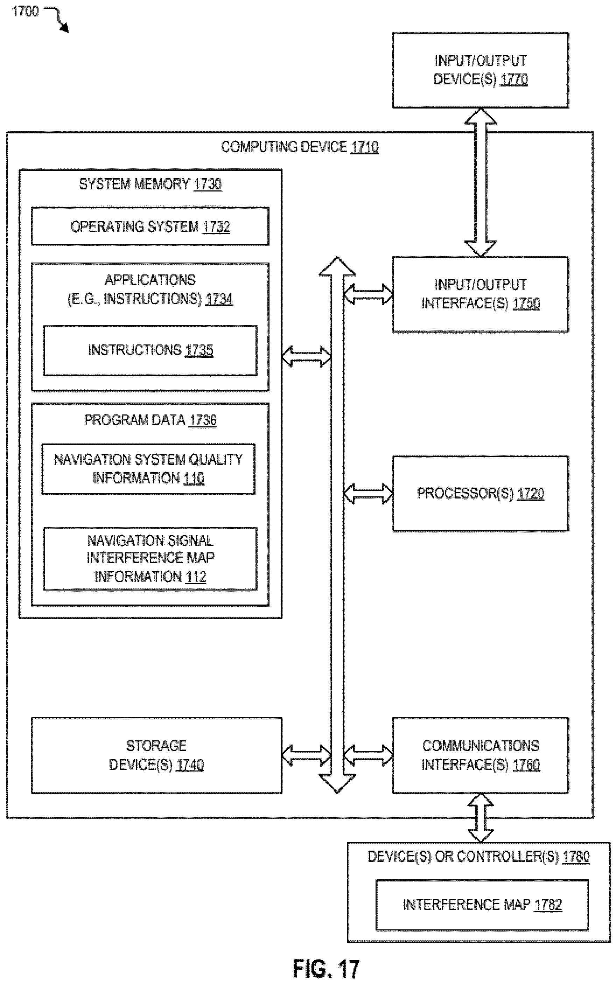

FIG. 17 is a block diagram of a computing environment 1700 including a computing device 1710 configured to support aspects of computer-implemented methods and computer-executable program instructions (or code) according to the present disclosure. For example, the computing device 1710, or portions thereof, is configured to execute instructions to initiate, perform, or control one or more operations described with reference to FIGs. 1-16. The computing device 1710 may include or correspond to the computing device 102.

The computing device 1710 includes one or more processors 1720. The one or more processors may include or correspond to the processor 208. The processor(s) 1720 are configured to communicate with system memory 1730, one or more storage devices 1740, one or more input/output interfaces 1750, one or more communications interfaces 1760, or any combination thereof. The system memory 1730 may include or correspond to the memory 206. The system memory 1730 includes volatile memory devices (e.g., random access memory (RAM) devices), nonvolatile memory devices (e.g., read-only memory (ROM) devices, programmable read-only memory, and flash memory), or both. The system memory 1730 stores an operating system 1732, which may include a basic input/output system for booting the computing device 1710 as well as a full operating system to enable the computing device 1710 to interact with users, other programs, and other devices. The system memory 1730 stores system (program) data 1736, such as the navigation system quality information 110, the navigation signal interference map information 112, or a combination thereof.

The system memory 1730 includes one or more applications 1734 (e.g., sets of instructions) executable by the processor(s) 1720. As an example, the one or more applications 1734 include instructions 1735 executable by the processor(s) 1720 to initiate, control, or perform one or more operations described with reference to FIGs. 1-16. To illustrate, the one or more applications 1734 include instructions 1735 executable by the processor(s) 1720 to initiate, control, or perform one or more operations described with reference to the aggregator 240, the filter 242, the map generator 244, the source identifier 246, the spoofing identifier 248, or a combination thereof.

In a particular implementation, the system memory 1730 includes a non-transitory, computer readable medium storing the instructions that, when executed by the processor(s) 1720, cause the processor(s) 1720 to initiate, perform, or control operations to identify interference associated with navigation signals. The operations include obtaining navigation system quality information 110 from multiple data sources. The navigation system quality information 110 includes first data obtained from a first data source of the multiple data sources and second data obtained from a second data source of the multiple data sources. The operations also include aggregating the first data based on one or more parameters to generate aggregated first data, and identifying one or more areas associated with low quality navigation signals based on the second data. The operations further include discarding, based on the one or more areas, a portion of the aggregated first data to generate navigation signal interference map information 112. The operations include outputting the navigation signal interference map information 112.

The one or more storage devices 1740 include nonvolatile storage devices, such as magnetic disks, optical disks, or flash memory devices. In a particular example, the storage devices 1740 include both removable and non-removable memory devices. The storage devices 1740 are configured to store an operating system, images of operating systems, applications (e.g., one or more of the applications 1734), and program data (e.g., the program data 1736). In a particular aspect, the system memory 1730, the storage devices 1740, or both, include tangible computer-readable media. In a particular aspect, one or more of the storage devices 1740 are external to the computing device 1710.

The one or more input/output interfaces 1750 enable the computing device 1710 to communicate with one or more input/output devices 1770 to facilitate user interaction. For example, the one or more input/output interfaces 1750 can include a display interface, an input interface, or both. For example, the input/output interface 1750 is adapted to receive input from a user, to receive input from another computing device, or a combination thereof. In some implementations, the input/output interface 1750 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 1770 includes one or more user interface devices and displays, including some combination of buttons, keyboards, pointing devices, displays, speakers, microphones, touch screens, and other devices.

The processor(s) 1720 are configured to communicate with devices or controllers 1780 via the one or more communications interfaces 1760. For example, the one or more communications interfaces 1760 can include a network interface. The devices or controllers 1780 can include, for example, the aircraft 103, the device 280, one or more other devices, or any combination thereof. The devices or controllers 1780 may include or be configured to generate or display an interference map 1782. The interference map may include or correspond to one or more of the maps of FIGs. 6-9, 12, or 13. Additionally, or alternatively, the devices or controllers 1780 may be configured to request the navigation signal interference map information 112 from the computing device 1710. In some such implementations, the devices or controllers 1780 may generate the interference map based on the navigation signal interference map information 112.

In conjunction with the described systems and methods, an apparatus for aiding in design of an object is disclosed that includes means for obtaining navigation system quality information from multiple data sources. The navigation system quality information includes first data obtained from a first data source of the multiple data sources and second data obtained from a second data source of the multiple data sources. In some implementations, the means for obtaining the navigation system quality information can include or correspond to the computing device 102, the memory 206, the processor 208, the computing device 1710, the processor 1720, the system memory 1730, the input/output interface 1750, the communication interface 1760, one or more other circuits or devices configured to obtain the navigation system quality information, or a combination thereof.

The apparatus also includes means for aggregating the first data based on one or more parameters to generate aggregated first data. For example, the means for aggregating the first data can include or correspond to the computing device 102, the processor 208, the aggregator 240, the computing device 1710, the processor 1720, one or more other devices configured to aggregate the first data, or a combination thereof.

The apparatus also includes means for identifying one or more areas associated with low quality navigation signals based on the second data. For example, the means for identifying the one or more areas can include or correspond to the computing device 102, the processor 208, the computing device 1710, the processor 1720, one or more other devices configured to identify the one or more areas, or a combination thereof.

The apparatus also includes means for discarding, based on the one or more areas, a portion of the aggregated first data to generate navigation signal interference map information. For example, the means for discarding the portion of the aggregated first data can include or correspond to the computing device 102, the processor 208, the filter 242, the computing device 1710, the processor 1720, one or more other devices configured to discard the portion of the aggregated first data, or a combination thereof.

The apparatus also includes means for outputting the navigation signal interference map information. For example, the means for outputting the navigation signal interference map information can include or correspond to the computing device 102, the processor 208, the computing device 1710, the processor 1720, one or more other devices configured to output the navigation signal interference map information, or a combination thereof.

In some implementations, a non-transitory, computer readable medium stores instructions that, when executed by one or more processors, cause the one or more processors to initiate, perform, or control operations to perform part or all of the functionality described above. For example, the instructions may be executable to implement one or more of the operations or methods of FIGs. 1-17. In some implementations, part or all of one or more of the operations or methods of FIGs. 1-17 may be implemented by one or more processors (e.g., one or more central processing units (CPUs), one or more graphics processing units (GPUs), one or more digital signal processors (DSPs)) executing instructions, by dedicated hardware circuitry, or any combination thereof.

Particular aspects of the disclosure are described below in sets of interrelated Examples:
According to Example 1, a system includes one or more processors configured to obtain navigation system quality information from multiple data sources, the navigation system quality information includes first data obtained from a first data source of the multiple data sources and second data obtained from a second data source of the multiple data sources; aggregate the first data based on one or more parameters to generate aggregated first data; identify one or more areas associated with low quality navigation signals based on the second data; discard, based on the one or more areas, a portion of the aggregated first data to generate navigation signal interference map information; and output the navigation signal interference map information.

Example 2 includes the system of Example 1, where the navigation signal interference map information indicates areas of radio frequency interference associated with navigation signals of a global navigation satellite system (GNSS).

Example 3 includes the system of Example 1 or Example 2, where the first data source of the multiple data sources includes an automatic dependent surveillance broadcast (ADS-B) data source, a quick access recorder (QAR) data source, or a combination thereof; and the second data source of the multiple data sources includes a receiver autonomous integrity monitoring (RAIM) data source, a system wide information management (SWIM) data source, or a combination thereof.

Example 4 includes the system of any of Examples 1 to 3, where the first data source of the multiple data sources includes the first data having a first data type, where the second data source of the multiple data sources includes the second data having a second data type, and where the second data type is different from the first data type.

Example 5 includes the system of any of Examples 1 to 4, where the first data includes navigation integrity category (NIC) data, navigation accuracy category-position (NACp) data, or a combination thereof.

Example 6 includes the system of any of Examples 1 to 5, where the one or more parameters include an integrity threshold, an area size, a vertical granularity, a time period, or a combination thereof.

Example 7 includes the system of any of Examples 1 to 6, where the one or more processors are further configured to obtain the first data from the navigation system quality information, the first data source includes an automatic dependent surveillance broadcast (ADS-B) data source; filter on-ground data from the first data to generate filtered first data; and aggregate the filtered first data based on one or more parameters to generate the aggregated first data.

Example 8 includes the system of Example 7, where the one or more processors are further configured to identify an in-flight aircraft associated with at least a portion of the filtered first data; obtain additional data associated with the in-flight aircraft from the ADS-B data source; compare the additional data and an integrity threshold; based on the additional data satisfying the integrity threshold, generate a notification of a data integrity event; and transmit the notification.

Example 9 includes the system of Example 7 or Example 8, where the one or more processors are further configured to obtain the second data from the navigation system quality information, the second data source includes a receiver autonomous integrity monitoring (RAIM) data source; and the navigation signal interference map information includes a remainder of the aggregated first data after the portion of the aggregated first data is discarded.

Example 10 includes the system of any of Examples 1 to 9, where an interference map is generated based on the navigation signal interference map information.

Example 11 includes the system of Example 10, where the interference map includes multiple hexagonal areas, and where at least one hexagonal area of the multiple hexagonal areas indicates, for each vertical level of one or more vertical levels of the at least one hexagonal area, a degradation amount of navigation signals at the vertical level.

Example 12 includes the system of any of Examples 1 to 11, where the one or more processors are further configured to perform a pattern search on the navigation signal interference map information to identify a source of interference; and generate interference source information that indicates a location of the source of interference.

Example 13 includes the system of Example 12, where, to perform the pattern search, the one or more processors are further configured to for a geographic area: for each vertical level of a set of vertical levels, determine, based on the navigation signal interference map information, an interference value associated with the vertical level; perform a comparison between the set of interference values of the set of vertical levels and an interference pattern; and identify the source of interference based on a result of the comparison.

Example 14 includes the system of Example 12 or Example 13, where the one or more processors are further configured to identify, based on the navigation signal interference map information, a spoofing navigation signal.

Example 15 includes the system of Example 14, where, to identify the spoofing navigation signal, the one or more processors are further configured to: identify, based on the navigation signal interference map information, an area having a jamming event associated with radio frequency interference of one or more navigation signals; determine a first signal quality value a first navigation signal associated with the area prior to the jamming event; identify an end of the jamming event; determine a second signal quality value of a second navigation signal associated with the area after the end of the jamming event; perform a comparison based on the first signal quality value and the second signal quality value; and determine whether the second navigation signal is the spoofing navigation signal based on a result of the comparison.

According to Example 16, a method for identifying navigation signal interference, the method includes obtaining navigation system quality information from multiple data sources, the navigation system quality information includes first data obtained from a first data source of the multiple data sources and second data obtained from a second data source of the multiple data sources; aggregating the first data based on one or more parameters to generate aggregated first data; identifying one or more areas associated with low quality navigation signals based on the second data; discarding, based on the one or more areas, a portion of the aggregated first data to generate navigation signal interference map information; and outputting the navigation signal interference map information.

Example 17 includes the method of Example 16, the method further including obtaining the first data from the navigation system quality information, the first data source including an automatic dependent surveillance broadcast (ADS-B) data source.

Example 18 includes the method of Example 16 or Example 17, the method further including obtaining the second data from the navigation system quality information, the second data source including a receiver autonomous integrity monitoring (RAIM) data source.

Example 19 includes the method of any of Examples 16 to 18, the method further including performing a pattern search on the navigation signal interference map information to identify a source of interference.

Example 20 includes the method of Example 19, where performing the pattern search includes, for a geographic area: for each vertical level of a set of vertical levels, determining, based on the navigation signal interference map information, an interference value associated with the vertical level; and performing a comparison between the set of interference values of the set of vertical levels and an interference pattern.

Example 21 includes the method of Example 20, the method further including identifying the source of interference based on a result of the comparison.

Example 22 includes the method of any of Examples 19 to 21, the method further including generating interference source information that indicates a location of the source of interference.

Example 23 includes the method of Example 22, the method further including outputting the interference source information with the navigation signal interference map information.

Example 24 includes the method of any of Examples 16 to 23, the method further including identifying, based on the navigation signal interference map information, a spoofing navigation signal.

Example 25 includes the method of Example 24, where identifying the spoofing navigation signal includes identifying, based on the navigation signal interference map information, an area having a jamming event associated with radio frequency interference of one or more navigation signals.

Example 26 includes the method of Example 25, the method further including determining a first signal quality value a first navigation signal associated with the area prior to the jamming event.

Example 27 includes the method of Example 26, the method further including identifying an end of the jamming event; determine a second signal quality value of a second navigation signal associated with the area after the end of the jamming event.

Example 28 includes the method of Example 27, the method further including performing a comparison based on the first signal quality value and the second signal quality value.

Example 29 includes the method of Example 28, the method further including determining whether the second navigation signal is the spoofing navigation signal based on a result of the comparison.

Example 30 includes the method of any of Examples 16 to 29, where the navigation signal interference map information indicates areas of radio frequency interference associated with navigation signals of a global navigation satellite system (GNSS).

Example 31 includes the method of any of Examples 16 to 30, where the first data source of the multiple data sources includes an automatic dependent surveillance broadcast (ADS-B) data source, a quick access recorder (QAR) data source, or a combination thereof.

Example 32 includes the method of any of Examples 16 to 31, where the second data source of the multiple data sources includes a receiver autonomous integrity monitoring (RAIM) data source, a system wide information management (SWIM) data source, or a combination thereof.

Example 33 includes the method of any of Examples 16 to 32, where the first data source of the multiple data sources includes the first data having a first data type, where the second data source of the multiple data sources includes the second data having a second data type, and where the second data type is different from the first data type.

Example 34 includes the method of any of Examples 16 to 32, where the first data includes navigation integrity category (NIC) data, navigation accuracy category-position (NACp) data, or a combination thereof.

Example 35 includes the method of any of Examples 16 to 34, where the one or more parameters include an integrity threshold, an area size, a vertical granularity, a time period, or a combination thereof.

Example 36 includes the method of any of Examples 16 to 35, the method further including obtaining the first data from the navigation system quality information, the first data source includes an automatic dependent surveillance broadcast (ADS-B) data source; and filtering on-ground data from the first data to generate filtered first data; and aggregate the filtered first data based on one or more parameters to generate the aggregated first data.

Example 37 includes the method of Example 36, the method further including identifying an in-flight aircraft associated with at least a portion of the filtered first data.

Example 38 includes the method of Example 37, the method further including obtaining additional data associated with the in-flight aircraft from the ADS-B data source.

Example 39 includes the method of Example 38, the method further including comparing the additional data and an integrity threshold.

Example 40 includes the method of Example 39, the method further including, based on the additional data satisfying the integrity threshold, generating a notification of a data integrity event; and transmitting the notification.

Example 41 includes the method of Example 40, the method further including transmitting the notification.

Example 42 includes the method of any of Examples 16 to 41, the method further including obtaining the second data from the navigation system quality information, the second data source includes a receiver autonomous integrity monitoring (RAIM) data source.

Example 43 includes the method of any of Examples 16 to 42, where the navigation signal interference map information includes a remainder of the aggregated first data after the portion of the aggregated first data is discarded.

Example 44 includes the method of any of Examples 16 to 43, the method further including generating an interference map based on the navigation signal interference map information.

Example 45 includes the method of Example 44, where outputting the navigation signal interference map information includes outputting the interference map.

Example 46 includes the method of Example 44 or Example 45, where the interference map includes multiple areas; and at least one area of the multiple areas indicates, for each vertical level of one or more vertical levels of the at least one area, a degradation amount of navigation signals at the vertical level.

Example 47 includes the method of Example 46, where the multiple areas include multiple hexagonal areas.

According to Example 48, a device includes: a memory configured to store instructions; and a processor configured to execute the instructions to perform the method of any of Example 16 to Example 47.

According to Example 49, a non-transitory computer-readable medium stores instructions that, when executed by a processor, cause the processor to perform the method of any of Example 16 to Example 47.

According to Example 50, an apparatus includes means for carrying out the method of any of Example 16 to Example 47.

According to Example 51, a non-transient, computer-readable medium storing instructions executable by one or more processors to perform operations includes obtaining navigation system quality information from multiple data sources, the navigation system quality information includes first data obtained from a first data source of the multiple data sources and second data obtained from a second data source of the multiple data sources; aggregating the first data based on one or more parameters to generate aggregated first data; identifying one or more areas associated with low quality navigation signals based on the second data; discarding, based on the one or more areas, a portion of the aggregated first data to generate navigation signal interference map information; and outputting the navigation signal interference map information.

Example 52 includes the non-transient, computer-readable medium of Example 51, where the navigation signal interference map information indicates areas of degradation of navigation signals of a global navigation satellite system (GNSS).

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

## Claims

1. A system comprising:
one or more processors (208) configured to:
obtain navigation system quality information (110) from multiple data sources (105, 108 260), the navigation system quality information (110) includes first data (266) obtained from a first data source (262) of the multiple data sources (105, 108 260) and second data (268) obtained from a second data source (264) of the multiple data sources (105, 108 260);
aggregate the first data (266) based on one or more parameters (212) to generate aggregated first data (214);
identify one or more areas (402) associated with low quality navigation signals based on the second data (268);
discard, based on the one or more areas (402), a portion of the aggregated first data (214) to generate navigation signal interference map information (112); and
output the navigation signal interference map information (112).

2. The system of claim 1, wherein the navigation signal interference map information (112) indicates areas of radio frequency interference associated with navigation signals of a global navigation satellite system (GNSS) (106).

3. The system of any one of claims 1 or 2, wherein:
the first data source (262) of the multiple data sources (105, 108 260) includes an automatic dependent surveillance broadcast (ADS-B) data source (362), a quick access recorder (QAR) data source (366), or a combination thereof; and
the second data source (264) of the multiple data sources (105, 108 260) includes a receiver autonomous integrity monitoring (RAIM) data source (368), a system wide information management (SWIM) data source (372), or a combination thereof.

4. The system of any one of claims 1 to 3, wherein:
the first data source (262) of the multiple data sources (105, 108 260) includes the first data having a first data type;
the second data source (264) of the multiple data sources (105, 108 260) includes the second data having a second data type; and
the second data type is different from the first data type.

5. The system of any one of claims 1 to 4, wherein the first data (266) includes navigation integrity category (NIC) data, navigation accuracy category-position (NACp) data, or a combination thereof.

6. The system of any one of claims 1 to 5, wherein the one or more parameters (212) include an integrity threshold (22), an area size (224), a vertical granularity (226), a time period (228), or a combination thereof.

7. The system of any one of claims 1 to 6, wherein the one or more processors (208) are further configured to:
obtain the first data (266) from the navigation system quality information (110), the first data source (262) includes an automatic dependent surveillance broadcast (ADS-B) data source (362);
filter on-ground data from the first data (266) to generate filtered first data; and
aggregate the filtered first data based on one or more parameters (212) to generate the aggregated first data (214).

8. The system of claim 7, wherein the one or more processors (208) are further configured to:
identify an in-flight aircraft associated with at least a portion of the filtered first data;
obtain additional data associated with the in-flight aircraft from the ADS-B data source (362);
compare the additional data and an integrity threshold (222);
based on the additional data satisfying the integrity threshold (222), generate a notification of a data integrity event; and
transmit the notification.

9. The system of any one of claims 7 or 8, wherein:
the one or more processors (208) are further configured to obtain the second data (268) from the navigation system quality information (110), the second data source (264) includes a receiver autonomous integrity monitoring (RAIM) data source (368); and
the navigation signal interference map information (112) includes a remainder of the aggregated first data (214) after the portion of the aggregated first data (214) is discarded.

10. The system of any one of claims 1 to 9, wherein an interference map (600, 700, 800, 900, 1200, 1300) is generated based on the navigation signal interference map information (112).

11. The system of claim 10, wherein:
the interference map (600, 700, 800, 900, 1200, 1300) includes multiple hexagonal areas (605, 905); and
at least one hexagonal area of the multiple hexagonal areas (605, 905) indicates, for each vertical level of one or more vertical levels of the at least one hexagonal area, a degradation amount of navigation signals at the vertical level.

12. The system of any one of claims 1 to 11, wherein the one or more processors (208) are further configured to:
perform a pattern search on the navigation signal interference map information (112) to identify a source of interference; and
generate interference source information that indicates a location of the source of interference.

13. The system of claim 12, wherein, to perform the pattern search, the one or more processors (208) are further configured to:
for a geographic area:
for each vertical level of a set of vertical levels, determine, based on the navigation signal interference map information (112), an interference value associated with the vertical level;
perform a comparison between the set of interference values of the set of vertical levels and an interference pattern; and
identify the source of interference based on a result of the comparison.

14. A method (1400) for identifying navigation signal interference, the method comprising:
obtaining (1402) navigation system quality information (110) from multiple data sources (105, 108 260), the navigation system quality information (110) includes first data (266) obtained from a first data source (262) of the multiple data sources (105, 108 260) and second data (268) obtained from a second data source (264) of the multiple data sources (105, 108 260);
aggregating (1404) the first data (266) based on one or more parameters (212) to generate aggregated first data (214);
identifying (1406) one or more areas (402) associated with low quality navigation signals based on the second data (268);
discarding (1408), based on the one or more areas (402), a portion of the aggregated first data to generate navigation signal interference map information (112); and
outputting (1410) the navigation signal interference map information (112).

15. A non-transient, computer-readable medium storing instructions executable by one or more processors (208) to perform operations comprising:
obtaining navigation system quality information (110) from multiple data sources (105, 108 260), the navigation system quality information (110) includes first data (266) obtained from a first data source (262) of the multiple data sources (105, 108 260) and second data (268) obtained from a second data source (264) of the multiple data sources (105, 108 260);
aggregating the first data (266) based on one or more parameters (212) to generate aggregated first data (214);
identifying one or more areas (402) associated with low quality navigation signals based on the second data (268);
discarding, based on the one or more areas (402), a portion of the aggregated first data (214) to generate navigation signal interference map information (112); and
outputting the navigation signal interference map information (112).
